# EUROPEAN PATENT APPLICATION

(11) **EP 4 791 097 A1**
(43) Date of publication of application: **12.08.2026**
(21) Application number: 24884506.7
(22) Date of filing: 22.10.2024
(51) Int. Cl.: H04W 72/044

(54) **COMMUNICATION METHOD AND APPARATUS**

(30) Priority: 30.10.2023 CN 202311432564
(71) Applicant: HUAWEI TECHNOLOGIES CO., LTD., Shenzhen 518129 (CN)
(72) Inventor: YI, Feng, Shenzhen, Guangdong 518129 (CN); ZHANG, Yi, Shenzhen, Guangdong 518129 (CN); SU, Hongjia, Shenzhen, Guangdong 518129 (CN)
(74) Representative: Pfenning, Meinig & Partner mbB
(86) International application number: PCT/CN2024/126376
(87) International publication number: WO 2025/092502

(57) **Abstract**

This application discloses a communication method and apparatus, pertaining to the communication field. The method includes: excluding, from a first candidate resource set, N time units adjacent to a first time-frequency resource in the time domain to obtain a second candidate resource set, where N is a positive integer greater than 0, and the first time-frequency resource is used to receive or send first sidelink information; determining a second time-frequency resource based on the second candidate resource set; and sending second sidelink information to a second terminal device on the second time-frequency resource. This application reduces sidelink information transmission errors caused by untimely beam switching.

## Description

This application claims priority to Chinese Patent Application No. 202311432564.8, filed on October 30, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a wireless communication network, an air interface (air interface) for direct communication between user equipments is a PC5 interface. From the perspective of a link, a link for direct communication between user equipments may be defined as a sidelink (sidelink, SL). Therefore, direct communication between user equipments is also referred to as PC5 communication or SL communication.

In SL communication, the user equipment may autonomously select, from a resource pool, a time-frequency resource used for SL communication, to communicate with another user equipment.

Currently, when user equipments communicate with each other, issues may arise where untimely beam switching leads to missed signal reception or transmission.

### SUMMARY

This application provides a communication method and apparatus to reduce sidelink information transmission errors caused by untimely beam switching.

According to a first aspect, this application provides a communication method. The method includes: excluding, from a first candidate resource set, N time units adjacent to a first time-frequency resource in the time domain, to obtain a second candidate resource set, where N is a positive integer greater than 0, and the first time-frequency resource is used to receive or send first sidelink information; determining a second time-frequency resource based on the second candidate resource set; and sending second sidelink information to a second terminal device on the second time-frequency resource.

For example, the method may be applied to a first terminal device.

In the method, when selecting a time-frequency resource used to send the second sidelink information, the first terminal device excludes, from the first candidate resource set, the N time units adjacent to the first time-frequency resource in the time domain, to obtain the second candidate resource set, and determines, based on the second candidate resource set, the second time-frequency resource used to send the second sidelink information, so that the selected second time-frequency resource and the first time-frequency resource may be non-adjacent or separated by at least the N time units, and more time is reserved for beam switching, to reduce sidelink information transmission errors caused by untimely beam switching, namely, a beam switching delay.

In a possible design, the method further includes: excluding the first time-frequency resource from the first candidate resource set.

In a possible design, N is preconfigured, configured, or predefined.

In an implementation, a value of N may be preconfigured in hardware and/or software of the first terminal device, for example, recorded/written in advance, and may be changed by using software or hardware.

In another implementation, a value of N may be configured by a network device (for example, a base station) for the first terminal device by using a system information block (system information block, SIB) message, radio resource control (radio resource control, RRC) signaling, or a master information block (master information block, MIB) message, for example, recorded/written into hardware and/or software of the first terminal device.

In still another implementation, a value of N may be configured by another device (for example, another terminal device) for the first terminal device by using PC5-RRC signaling.

In still another implementation, a value of N does not need to be configured by another device, and may be information predefined (which may be recorded/written in advance) in hardware and/or software of the first terminal device, or may be understood as information that cannot be changed by a network device or another terminal device. In other words, N may be predefined in the first terminal device in a standard or protocol manner.

In a possible design, a value of N is related to a beam switching capability of a first terminal device, and the beam switching capability of the first terminal device indicates a quantity of times that the first terminal device is capable of performing beam switching in one slot.

In this design, the value of N is determined based on the beam switching capability of the first terminal device, so that sufficient time can be reserved for beam switching between the second time-frequency resource selected by the first terminal device and the first time-frequency resource, to meet a switch capability requirement of a terminal device or a user equipment (user equipment, UE), and further reduce a probability of the sidelink information transmission errors caused by the untimely beam switching, namely, the beam switching delay. In addition, a quantity of excluded adjacent time units may be further controlled to be within a proper range, to reduce a waste of time-frequency resources and improve resource utilization.

In a possible design, the N time units adjacent to the first time-frequency resource in the time domain are used to perform beam switching before or after the first sidelink information is sent or received.

In a possible design, the second candidate resource set is determined by a physical layer or a medium access control layer.

In a possible design, the first time-frequency resource and the second time-frequency resource are separated by at least the N time units in the time domain, or when beams corresponding to the first sidelink information and the second sidelink information are different, the first time-frequency resource and the second time-frequency resource are separated by at least the N time units in the time domain.

In this design, the first time-frequency resource and the second time-frequency resource are separated by at least the N time units in the time domain, or when the beams corresponding to the first sidelink information and the second sidelink information are different, the first time-frequency resource and the second time-frequency resource are separated by at least the N time units in the time domain, and more time may be reserved for beam switching, to reduce the sidelink information transmission errors caused by the untimely beam switching, namely, the beam switching delay.

In a possible design, the method further includes: excluding a non-preferred time-frequency resource of the second terminal device from the first candidate resource set, where the non-preferred time-frequency resource of the second terminal device includes M time units adjacent to a third time-frequency resource in the time domain, M is a positive integer greater than 0, and the third time-frequency resource is used by the second terminal device to receive or send third sidelink information.

In this design, the M time units adjacent to the third time-frequency resource in the time domain may be defined as the non-preferred time-frequency resource of the second terminal device. The non-preferred time-frequency resource may be understood as a time-frequency resource on which the second terminal device does not expect to receive sidelink information from another terminal device, for example, the second sidelink information sent by the first terminal device. When selecting the time-frequency resource used to send the second sidelink information, the first terminal device excludes the non-preferred time-frequency resource of the second terminal device from the first candidate resource set, so that the selected second time-frequency resource and the third time-frequency resource may be non-adjacent or separated by at least the M time units, and more time is reserved for beam switching of the second terminal device, to reduce the sidelink information transmission errors caused by the untimely beam switching, namely, the beam switching delay.

In a possible design, the non-preferred time-frequency resource of the second terminal device further includes the third time-frequency resource.

In a possible design, the method further includes: receiving first indication information from the second terminal device, where the first indication information indicates the non-preferred time-frequency resource of the second terminal device.

In some possible implementations, the first indication information may be inter-UE coordination (inter-UE coordination, IUC) information, also referred to as inter-UE cooperation information.

In a possible design, the determining the second time-frequency resource based on the second candidate resource set includes: determining the second time-frequency resource based on the second candidate resource set and a preferred time-frequency resource of the second terminal device, or based on a preferred time-frequency resource of the second terminal device, where the preferred time-frequency resource of the second terminal device does not include M time units adjacent to a third time-frequency resource in the time domain, M is a positive integer greater than 0, and the third time-frequency resource is used by the second terminal device to receive or send third sidelink information.

In this design, when the first terminal device selects the time-frequency resource used to send the second sidelink information, the selected second time-frequency resource and the third time-frequency resource may be non-adjacent or separated by at least the M time units, and more time is reserved for beam switching of the second terminal device, to reduce the sidelink information transmission errors caused by the untimely beam switching, namely, the beam switching delay.

In a possible design, the preferred time-frequency resource of the second terminal device does not include the third time-frequency resource.

In a possible design, the method further includes: receiving second indication information from the second terminal device, where the second indication information indicates the preferred time-frequency resource of the second terminal device.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In this design, the value of M is determined based on the beam switching capability of the second terminal device, so that a beam switching capability requirement of the second terminal device can be considered for the non-preferred time-frequency resource of the second terminal device, and the second terminal device can provide a more realistic and effective non-preferred time-frequency resource for the first terminal device. Sufficient time can be reserved for beam switching (for example, the second terminal device performs beam switching) between the second time-frequency resource selected by the first terminal device and the third time-frequency resource, to meet the switch capability requirement of the UE, and further reduce the probability of the sidelink information transmission errors caused by the untimely beam switching, namely, the beam switching delay. In addition, the value of M may be further controlled to be within a proper range, to reduce a waste of time-frequency resources and improve resource utilization.

In a possible design, the M time units adjacent to the third time-frequency resource in the time domain are used to perform beam switching before or after the third sidelink information is sent or received.

In a possible design, the method further includes: receiving third indication information from the second terminal device, where the third indication information indicates whether a beam switching conflict exists between the second time-frequency resource and the third time-frequency resource, and the third time-frequency resource is used by the second terminal device to receive or send third sidelink information; and reselecting the second time-frequency resource when the third indication information indicates that a beam switching conflict exists between the second time-frequency resource and the third time-frequency resource.

In this design, when a beam switching conflict exists between the second time-frequency resource and the third time-frequency resource, the first terminal device reselects the second time-frequency resource. This can also reduce the sidelink information transmission errors caused by the untimely beam switching, namely, the beam switching delay.

In a possible design, the time unit may include a slot, a symbol, or a subframe.

For example, N slots adjacent to the first time-frequency resource in the time domain may be excluded from the first candidate resource set, to obtain the second candidate resource set; or N symbols, for example, orthogonal frequency division multiplexing (orthogonal frequency division multiplexing, OFDM) symbols, adjacent to the first time-frequency resource in the time domain may be excluded from the first candidate resource set, to obtain the second candidate resource set; or N subframes adjacent to the first time-frequency resource in the time domain may be excluded from the first candidate resource set, to obtain the second candidate resource set. A granularity of the time unit is not limited in this application.

According to a second aspect, this application provides a communication apparatus. The apparatus has a function of implementing the method according to the first aspect. The function may be implemented by hardware, or may be implemented by executing corresponding software by hardware. The hardware or the software includes one or more units or modules corresponding to the function of the method according to the first aspect, for example, a processing unit and a sending unit.

The processing unit is configured to exclude, from a first candidate resource set, N time units adjacent to a first time-frequency resource in the time domain, to obtain a second candidate resource set, where N is a positive integer greater than 0, and the first time-frequency resource is used to receive or send first sidelink information. The processing unit is further configured to determine a second time-frequency resource based on the second candidate resource set.

The sending unit is configured to send second sidelink information to a second terminal device on the second time-frequency resource.

In a possible design, the processing unit is further configured to exclude the first time-frequency resource from the first candidate resource set.

In a possible design, N is preconfigured, configured, or predefined.

In a possible design, a value of N is related to a beam switching capability of a first terminal device, and the beam switching capability of the first terminal device indicates a quantity of times that the first terminal device is capable of performing beam switching in one slot.

In a possible design, the N time units adjacent to the first time-frequency resource in the time domain are used to perform beam switching before or after the first sidelink information is sent or received.

In a possible design, the second candidate resource set is determined by a physical layer or a medium access control layer.

In a possible design, the first time-frequency resource and the second time-frequency resource are separated by at least the N time units in the time domain, or when beams corresponding to the first sidelink information and the second sidelink information are different, the first time-frequency resource and the second time-frequency resource are separated by at least the N time units in the time domain.

In a possible design, the processing unit is further configured to exclude a non-preferred time-frequency resource of the second terminal device from the first candidate resource set, where the non-preferred time-frequency resource of the second terminal device includes M time units adjacent to a third time-frequency resource in the time domain, M is a positive integer greater than 0, and the third time-frequency resource is used by the second terminal device to receive or send third sidelink information.

In a possible design, the non-preferred time-frequency resource of the second terminal device further includes the third time-frequency resource.

In a possible design, the apparatus further includes a receiving unit, configured to receive first indication information from the second terminal device, where the first indication information indicates the non-preferred time-frequency resource of the second terminal device.

In a possible design, the processing unit is specifically configured to determine the second time-frequency resource based on the second candidate resource set and a preferred time-frequency resource of the second terminal device, or based on a preferred time-frequency resource of the second terminal device, where the preferred time-frequency resource of the second terminal device does not include M time units adjacent to a third time-frequency resource in the time domain, M is a positive integer greater than 0, and the third time-frequency resource is used by the second terminal device to receive or send third sidelink information.

In a possible design, the preferred time-frequency resource of the second terminal device does not include the third time-frequency resource.

In a possible design, the apparatus further includes a receiving unit, configured to receive second indication information from the second terminal device, where the second indication information indicates the preferred time-frequency resource of the second terminal device.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the apparatus further includes the receiving unit, configured to receive third indication information from the second terminal device, where the third indication information indicates whether a beam switching conflict exists between the second time-frequency resource and the third time-frequency resource, and the third time-frequency resource is used by the second terminal device to receive or send the third sidelink information.

The processing unit is further configured to reselect the second time-frequency resource when the third indication information indicates that a beam switching conflict exists between the second time-frequency resource and the third time-frequency resource.

In a possible design, the time unit includes a slot, a symbol, or a subframe.

According to a third aspect, this application further provides a communication apparatus, including a processor, configured to execute computer instructions stored in a memory. When the computer instructions are executed, the apparatus is enabled to perform the method according to any one of the first aspect or the possible designs of the first aspect.

According to a fourth aspect, this application further provides a communication apparatus, including a processor and an interface circuit. The processor is configured to communicate with another apparatus through the interface circuit, and perform the method according to any one of the first aspect or the possible designs of the first aspect.

The communication apparatuses according to the second aspect to the fourth aspect may be used for a terminal device, for example, a first terminal device.

According to a fifth aspect, this application further provides a computer-readable storage medium, including computer software instructions. When the computer software instructions are run in a terminal device or a chip built in the terminal device, the terminal device is enabled to perform the method according to any one of the first aspect or the possible designs of the first aspect.

It may be understood that for beneficial effects that can be achieved according to the second aspect to the fifth aspect, refer to the beneficial effects according to any one of the first aspect or the possible designs of the first aspect. Details are not described herein again.

According to a sixth aspect, this application provides a communication method. The method includes: sending or receiving first sidelink information on a first time-frequency resource; and sending or receiving second sidelink information on a second time-frequency resource, where the first time-frequency resource and the second time-frequency resource are separated by at least N time units in the time domain, or when beams corresponding to the first sidelink information and the second sidelink information are different, the first time-frequency resource and the second time-frequency resource are separated by at least N time units in the time domain, and N is a positive integer greater than 0.

For example, the method may be applied to a first terminal device.

According to the method, more time may be reserved for beam switching, to reduce sidelink information transmission errors caused by untimely beam switching, namely, a beam switching delay. When a value of N is related to a beam switching capability of a terminal device, sufficient time may be reserved for beam switching, to meet a switch capability requirement of a UE, and further reduce a probability of the sidelink information transmission errors caused by the untimely beam switching, namely, the beam switching delay. In addition, the value of N may be further controlled to be within a proper range, to reduce a waste of time-frequency resources and improve resource utilization.

In a possible design, N is preconfigured, configured, or predefined.

In a possible design, a value of N is related to a beam switching capability of a first terminal device, and the beam switching capability of the first terminal device indicates a quantity of times that the first terminal device is capable of performing beam switching in one slot.

In a possible design, the N time units are used to perform beam switching.

In a possible design, the time unit includes a slot, a symbol, or a subframe.

According to a seventh aspect, this application provides a communication apparatus. The apparatus has a function of implementing the method according to the sixth aspect. The function may be implemented by hardware, or may be implemented by executing corresponding software by hardware. The hardware or software includes one or more units or modules corresponding to the function of the method according to the sixth aspect, for example, a transceiver unit and a processing unit.

The transceiver unit is configured to send or receive first sidelink information on a first time-frequency resource; and send or receive second sidelink information on a second time-frequency resource, where the first time-frequency resource and the second time-frequency resource are separated by at least N time units in the time domain, or when beams corresponding to the first sidelink information and the second sidelink information are different, the first time-frequency resource and the second time-frequency resource are separated by at least N time units in the time domain, and N is a positive integer greater than 0.

Optionally, the processing unit may be configured to select the first time-frequency resource for the first sidelink information, and select the second time-frequency resource for the second sidelink information.

In a possible design, N is preconfigured, configured, or predefined.

In a possible design, a value of N is related to a beam switching capability of a first terminal device, and the beam switching capability of the first terminal device indicates a quantity of times that the first terminal device is capable of performing beam switching in one slot.

In a possible design, the N time units are used to perform beam switching.

In a possible design, the time unit includes a slot, a symbol, or a subframe.

According to an eighth aspect, this application further provides a communication apparatus, including a processor, configured to execute computer instructions stored in a memory. When the computer instructions are executed, the apparatus is enabled to perform the method according to any one of the sixth aspect or the possible designs of the sixth aspect.

According to a ninth aspect, this application further provides a communication apparatus, including a processor and an interface circuit. The processor is configured to communicate with another apparatus through the interface circuit, and perform the method according to any one of the sixth aspect or the possible designs of the sixth aspect.

The communication apparatuses according to the seventh aspect to the ninth aspect may be used for a terminal device, for example, a first terminal device.

According to a tenth aspect, this application further provides a computer-readable storage medium, including computer software instructions. When the computer software instructions are runs in a terminal device or a chip built in the terminal device, the terminal device is enabled to perform the method according to any one of the sixth aspect or the possible designs of the sixth aspect.

It may be understood that, for beneficial effects that can be achieved according to the seventh aspect to the tenth aspect, refer to the beneficial effects according to any one of the sixth aspect or the possible designs of the sixth aspect. Details are not described herein again.

According to an eleventh aspect, this application provides a communication method. The method includes: sending first indication information to a first terminal device, where the first indication information indicates a non-preferred time-frequency resource of a second terminal device, the non-preferred time-frequency resource of the second terminal device includes M time units adjacent to a third time-frequency resource in the time domain, M is a positive integer greater than 0, and the third time-frequency resource is used by the second terminal device to receive or send third sidelink information; receiving fourth indication information from the first terminal device, where the fourth indication information indicates to receive second sidelink information from the first terminal device on a second time-frequency resource, and the non-preferred time-frequency resource of the second terminal device does not include the second time-frequency resource.

For example, the method may be used for the second terminal device.

According to the method, more time may be reserved for beam switching, to reduce sidelink information transmission errors caused by untimely beam switching, namely, a beam switching delay. When a value of M is related to a beam switching capability of the second terminal device, a beam switching capability requirement of the second terminal device may be considered for the non-preferred time-frequency resource of the second terminal device, and the second terminal device may provide a more realistic and effective non-preferred time-frequency resource for the first terminal device, so that sufficient time is reserved for beam switching, to meet a switch capability requirement of a UE, and further reduce a probability of the sidelink information transmission errors caused by the untimely beam switching, namely, the beam switching delay. In addition, the value of M may be further controlled to be within a proper range, to reduce a waste of time-frequency resources and improve resource utilization.

In a possible design, the non-preferred time-frequency resource of the second terminal device further includes the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

According to a twelfth aspect, this application provides a communication apparatus. The apparatus has a function of implementing the method according to the eleventh aspect. The function may be implemented by hardware, or may be implemented by executing corresponding software by hardware. The hardware or software includes one or more units or modules corresponding to the function of the method according to the eleventh aspect, for example, a sending unit and a receiving unit.

The sending unit is configured to send first indication information to a first terminal device, where the first indication information indicates a non-preferred time-frequency resource of a second terminal device, the non-preferred time-frequency resource of the second terminal device includes M time units adjacent to a third time-frequency resource in the time domain, M is a positive integer greater than 0, and the third time-frequency resource is used by the second terminal device to receive or send third sidelink information.

The receiving unit is configured to receive fourth indication information from the first terminal device, where the fourth indication information indicates to receive second sidelink information from the first terminal device on a second time-frequency resource, and the non-preferred time-frequency resource of the second terminal device does not include the second time-frequency resource.

In a possible design, the non-preferred time-frequency resource of the second terminal device further includes the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

According to a thirteenth aspect, this application further provides a communication apparatus, including a processor, configured to execute computer instructions stored in a memory. When the computer instructions are executed, the apparatus is enabled to perform the method according to any one of the eleventh aspect or the possible designs of the eleventh aspect.

According to a fourteenth aspect, this application further provides a communication apparatus, including a processor and an interface circuit. The processor is configured to communicate with another apparatus through the interface circuit, and perform the method according to any one of the eleventh aspect or the possible designs of the eleventh aspect.

The communication apparatuses according to the twelfth aspect to the fourteenth aspect may be used for a terminal device, for example, a second terminal device.

According to a fifteenth aspect, this application further provides a computer-readable storage medium, including computer software instructions. When the computer software instructions are run in a terminal device or a chip built in the terminal device, the terminal device is enabled to perform the method according to any one of the eleventh aspect or the possible designs of the eleventh aspect.

It may be understood that, for beneficial effects that can be achieved according to the twelfth aspect to the fifteenth aspect, refer to the beneficial effects according to any one of the eleventh aspect or the possible designs of the eleventh aspect. Details are not described herein again.

According to a sixteenth aspect, this application provides a communication method. The method includes: receiving first indication information from a second terminal device, where the first indication information indicates a non-preferred time-frequency resource of the second terminal device, the non-preferred time-frequency resource of the second terminal device includes M time units adjacent to a third time-frequency resource in the time domain, M is a positive integer greater than 0, and the third time-frequency resource is used by the second terminal device to receive or send third sidelink information; sending fourth indication information to the second terminal device, where the fourth indication information indicates to receive second sidelink information from a first terminal device on a second time-frequency resource, and the non-preferred time-frequency resource of the second terminal device does not include the second time-frequency resource.

For example, the method may be applied to the first terminal device.

In a possible design, the non-preferred time-frequency resource of the second terminal device further includes the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

For beneficial effects of the sixteenth aspect, refer to the descriptions according to the eleventh aspect.

According to a seventeenth aspect, this application provides a communication apparatus. The apparatus has a function of implementing the method according to the sixteenth aspect. The function may be implemented by hardware, or may be implemented by executing corresponding software by hardware. The hardware or software includes one or more units or modules corresponding to the function of the method according to the sixteenth aspect, for example, a receiving unit and a sending unit.

The receiving unit is configured to receive first indication information from a second terminal device, where the first indication information indicates a non-preferred time-frequency resource of the second terminal device, the non-preferred time-frequency resource of the second terminal device includes M time units adjacent to a third time-frequency resource in the time domain, M is a positive integer greater than 0, and the third time-frequency resource is used by the second terminal device to receive or send third sidelink information.

The sending unit is configured to send fourth indication information to the second terminal device, where the fourth indication information indicates to receive second sidelink information from a first terminal device on a second time-frequency resource, and the non-preferred time-frequency resource of the second terminal device does not include the second time-frequency resource.

In a possible design, the non-preferred time-frequency resource of the second terminal device further includes the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

According to an eighteenth aspect, this application further provides a communication apparatus, including a processor, configured to execute computer instructions stored in a memory. When the computer instructions are executed, the apparatus is enabled to perform the method according to any one of the sixteenth aspect or the possible designs of the sixteenth aspect.

According to a nineteenth aspect, this application further provides a communication apparatus, including a processor and an interface circuit. The processor is configured to communicate with another apparatus through the interface circuit, and perform the method according to any one of the sixteenth aspect or the possible designs of the sixteenth aspect.

The communication apparatuses according to the seventeenth aspect to the nineteenth aspect may be used for a terminal device, for example, a first terminal device.

According to a twentieth aspect, this application further provides a computer-readable storage medium, including computer software instructions. When the computer software instructions are run in a terminal device or a chip built in the terminal device, the terminal device is enabled to perform the method according to any one of the sixteenth aspect or the possible designs of the sixteenth aspect.

It may be understood that, for beneficial effects that can be achieved according to the seventeenth aspect to the twentieth aspect, refer to the beneficial effects according to any one of the sixteenth aspect or the possible designs of the sixteenth aspect. Details are not described herein again.

According to a twenty-first aspect, this application provides a communication method. The method includes: sending second indication information to a first terminal device, where the second indication information indicates a preferred time-frequency resource of a second terminal device, the preferred time-frequency resource of the second terminal device does not include M time units adjacent to a third time-frequency resource in the time domain, M is a positive integer greater than 0, and the third time-frequency resource is used by the second terminal device to receive or send third sidelink information; and receiving fourth indication information from the first terminal device, where the fourth indication information indicates to receive second sidelink information from the first terminal device on a second time-frequency resource, and the preferred time-frequency resource of the second terminal device includes the second time-frequency resource.

For example, the method may be used for the second terminal device.

According to the method, more time may be reserved for beam switching, to reduce sidelink information transmission errors caused by untimely beam switching, namely, a beam switching delay. When a value of M is related to a beam switching capability of the second terminal device, a beam switching capability requirement of the second terminal device may be considered for the preferred time-frequency resource of the second terminal device, and the second terminal device may provide a more realistic and effective preferred time-frequency resource for the first terminal device, so that sufficient time is reserved for beam switching, to meet a switch capability requirement of a UE, and further reduce a probability of the sidelink information transmission errors caused by the untimely beam switching, namely, the beam switching delay. In addition, the value of M may be further controlled to be within a proper range, to reduce a waste of time-frequency resources and improve resource utilization.

In a possible design, the preferred time-frequency resource of the second terminal device does not include the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

According to a twenty-second aspect, this application provides a communication apparatus. The apparatus has a function of implementing the method according to the twenty-first aspect. The function may be implemented by hardware, or may be implemented by executing corresponding software by hardware. The hardware or software includes one or more units or modules corresponding to the function of the method according to the twenty-first aspect, for example, a sending unit and a receiving unit.

The sending unit is configured to send second indication information to a first terminal device, where the second indication information indicates a preferred time-frequency resource of the second terminal device, the preferred time-frequency resource of the second terminal device does not include M time units adjacent to a third time-frequency resource in the time domain, M is a positive integer greater than 0, and the third time-frequency resource is used by the second terminal device to receive or send third sidelink information.

The receiving unit is configured to receive fourth indication information from the first terminal device, where the fourth indication information indicates to receive second sidelink information from the first terminal device on a second time-frequency resource, and the preferred time-frequency resource of the second terminal device includes the second time-frequency resource.

In a possible design, the preferred time-frequency resource of the second terminal device does not include the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

According to a twenty-third aspect, this application further provides a communication apparatus, including a processor, configured to execute computer instructions stored in a memory. When the computer instructions are executed, the apparatus is enabled to perform the method according to any one of the twenty-first aspect or the possible designs of the twenty-first aspect.

According to a twenty-fourth aspect, this application further provides a communication apparatus, including a processor and an interface circuit. The processor is configured to communicate with another apparatus through the interface circuit, and perform the method according to any one of the twenty-first aspect or the possible designs of the twenty-first aspect.

The communication apparatuses according to the twenty-second aspect to the twenty-fourth aspect may be used for a terminal device, for example, a second terminal device.

According to a twenty-fifth aspect, this application further provides a computer-readable storage medium, including computer software instructions. When the computer software instructions are run in a terminal device or a chip built in the terminal device, the terminal device is enabled to perform the method according to any one of the twenty-first aspect or the possible designs of the twenty-first aspect.

It may be understood that, for beneficial effects that can be achieved according to the twenty-second aspect to the twenty-fifth aspect, refer to the beneficial effects according to any one of the twenty-first aspect or the possible designs of the twenty-first aspect. Details are not described herein again.

According to a twenty-sixth aspect, this application provides a communication method. The method includes: receiving second indication information from a second terminal device, where the second indication information indicates a preferred time-frequency resource of the second terminal device, the preferred time-frequency resource of the second terminal device does not include M time units adjacent to a third time-frequency resource in the time domain, M is a positive integer greater than 0, and the third time-frequency resource is used by the second terminal device to receive or send third sidelink information; and sending fourth indication information to the second terminal device, where the fourth indication information indicates to receive second sidelink information from a first terminal device on a second time-frequency resource, and the preferred time-frequency resource of the second terminal device includes the second time-frequency resource.

For example, the method may be applied to the first terminal device.

In a possible design, the preferred time-frequency resource of the second terminal device does not include the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

For beneficial effects of the twenty-sixth aspect, refer to the descriptions according to the twenty-first aspect.

According to a twenty-seventh aspect, this application provides a communication apparatus. The apparatus has a function of implementing the method according to the twenty-sixth aspect. The function may be implemented by hardware, or may be implemented by executing corresponding software by hardware. The hardware or software includes one or more units or modules corresponding to the function of the method according to the twenty-sixth aspect, for example, a receiving unit and a sending unit.

The receiving unit is configured to receive second indication information from a second terminal device, where the second indication information indicates a preferred time-frequency resource of the second terminal device, the preferred time-frequency resource of the second terminal device does not include M time units adjacent to a third time-frequency resource in the time domain, M is a positive integer greater than 0, and the third time-frequency resource is used by the second terminal device to receive or send third sidelink information.

The sending unit is configured to send fourth indication information to the second terminal device, where the fourth indication information indicates to receive second sidelink information from a first terminal device on a second time-frequency resource, and the preferred time-frequency resource of the second terminal device includes the second time-frequency resource.

In a possible design, the preferred time-frequency resource of the second terminal device does not include the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M time units adjacent to the third time-frequency resource in the time domain are used to perform beam switching before or after the third sidelink information is sent or received.

In a possible design, the time unit includes a slot, a symbol, or a subframe.

According to a twenty-eighth aspect, this application further provides a communication apparatus, including a processor, configured to execute computer instructions stored in a memory. When the computer instructions are executed, the apparatus is enabled to perform the method according to any one of the twenty-sixth aspect or the possible designs of the twenty-sixth aspect.

According to a twenty-ninth aspect, this application further provides a communication apparatus, including a processor and an interface circuit. The processor is configured to communicate with another apparatus through the interface circuit, and perform the method according to any one of the twenty-sixth aspect or the possible designs of the twenty-sixth aspect.

The communication apparatuses according to the twenty-seventh aspect to the twenty-ninth aspect may be used for a terminal device, for example, a first terminal device.

According to a thirtieth aspect, this application further provides a computer-readable storage medium, including computer software instructions. When the computer software instructions are run in a terminal device or a chip built in the terminal device, the terminal device is enabled to perform the method according to any one of the twenty-sixth aspect or the possible designs of the twenty-sixth aspect.

It may be understood that, for beneficial effects that can be achieved according to the twenty-seventh aspect to the thirtieth aspect, refer to the beneficial effects according to any one of the twenty-sixth aspect or the possible designs of the twenty-sixth aspect. Details are not described herein again.

According to a thirty-first aspect, this application provides a communication method. The method includes: receiving fourth indication information from a first terminal device, where the fourth indication information indicates to receive second sidelink information from the first terminal device on a second time-frequency resource; and sending third indication information to the first terminal device, where the third indication information indicates whether a beam switching collision exists between the second time-frequency resource and a third time-frequency resource, and the third time-frequency resource is used by a second terminal device to receive or send third sidelink information.

For example, the method may be used for the second terminal device.

In the method, when a beam switching conflict exists between the second time-frequency resource and the third time-frequency resource, the first terminal device reselects the second time-frequency resource. This can also reduce sidelink information transmission errors caused by untimely beam switching, namely, a beam switching delay. For details, refer to the descriptions in the foregoing embodiments. Details are not described again.

According to a thirty-second aspect, this application provides a communication apparatus. The apparatus has a function of implementing the method according to the thirty-first aspect. The function may be implemented by hardware, or may be implemented by executing corresponding software by hardware. The hardware or software includes one or more units or modules corresponding to the function of the method according to the thirty-first aspect, for example, a receiving unit and a sending unit.

The receiving unit is configured to receive fourth indication information from a first terminal device, where the fourth indication information indicates to receive second sidelink information from the first terminal device on a second time-frequency resource.

The sending unit is configured to send third indication information to the first terminal device, where the third indication information indicates whether a beam switching conflict exists between the second time-frequency resource and a third time-frequency resource, and the third time-frequency resource is used by a second terminal device to receive or send third sidelink information.

According to a thirty-third aspect, this application further provides a communication apparatus, including a processor, configured to execute computer instructions stored in a memory. When the computer instructions are executed, the apparatus is enabled to perform the method according to any one of the thirty-first aspect or the possible designs of the thirty-first aspect.

According to a thirty-fourth aspect, this application further provides a communication apparatus, including a processor and an interface circuit. The processor is configured to communicate with another apparatus through the interface circuit, and perform the method according to any one of the thirty-first aspect or the possible designs of the thirty-first aspect.

The communication apparatuses according to the thirty-second aspect to the thirty-fourth aspect may be used for a terminal device, for example, a second terminal device.

According to a thirty-fifth aspect, this application further provides a computer-readable storage medium, including computer software instructions. When the computer software instructions are run in a terminal device or a chip built in the terminal device, the terminal device is enabled to perform the method according to any one of the thirty-first aspect or the possible designs of the thirty-first aspect.

It may be understood that, for beneficial effects that can be achieved according to the thirty-second aspect to the thirty-fifth aspect, refer to the beneficial effects according to any one of the thirty-first aspect or the possible designs of the thirty-first aspect. Details are not described herein again.

According to a thirty-sixth aspect, this application provides a communication method. The method includes: sending fourth indication information to a second terminal device, where the fourth indication information indicates to receive second sidelink information from a first terminal device on a second time-frequency resource; receiving third indication information from the second terminal device, where the third indication information indicates whether a beam switching collision exists between the second time-frequency resource and a third time-frequency resource, and the third time-frequency resource is used by the second terminal device to receive or send third sidelink information; and reselecting the second time-frequency resource when the third indication information indicates that a beam switching conflict exists between the second time-frequency resource and the third time-frequency resource.

For beneficial effects of the thirty-sixth aspect, refer to the descriptions according to the thirty-first aspect.

According to a thirty-seventh aspect, this application provides a communication apparatus. The apparatus has a function of implementing the method according to the thirty-sixth aspect. The function may be implemented by hardware, or may be implemented by executing corresponding software by hardware. The hardware or software includes one or more units or modules corresponding to the function of the method according to the thirty-sixth aspect, for example, a sending unit, a receiving unit, and a processing unit.

The sending unit is configured to send fourth indication information to a second terminal device, where the fourth indication information indicates to receive second sidelink information from a first terminal device on a second time-frequency resource.

The receiving unit is configured to receive third indication information from the second terminal device, where the third indication information indicates whether a beam switching conflict exists between the second time-frequency resource and a third time-frequency resource, and the third time-frequency resource is used by the second terminal device to receive or send third sidelink information.

The processing unit is configured to reselect the second time-frequency resource when the third indication information indicates that a beam switching conflict exists between the second time-frequency resource and the third time-frequency resource.

According to a thirty-eighth aspect, this application further provides a communication apparatus, including a processor, configured to execute computer instructions stored in a memory. When the computer instructions are executed, the apparatus is enabled to perform the method according to any one of the thirty-sixth aspect or the possible designs of the thirty-sixth aspect.

According to a thirty-ninth aspect, this application further provides a communication apparatus, including a processor and an interface circuit. The processor is configured to communicate with another apparatus through the interface circuit, and perform the method according to any one of the thirty-sixth aspect or the possible designs of the thirty-sixth aspect.

The communication apparatuses according to the thirty-seventh aspect to the thirty-ninth aspect may be used for a terminal device, for example, a first terminal device.

According to a fortieth aspect, this application further provides a computer-readable storage medium, including computer software instructions. When the computer software instruction are run in a terminal device or a chip built in the terminal device, the terminal device is enabled to perform the method according to any one of the thirty-sixth aspect or the possible designs of the thirty-sixth aspect.

It may be understood that, for beneficial effects that can be achieved according to the thirty-seventh aspect to the fortieth aspect, refer to the beneficial effects according to any one of the thirty-sixth aspect or the possible designs of the thirty-sixth aspect. Details are not described herein again.

According to a forty-first aspect, this application provides a communication method. The method includes: sending or receiving first sidelink information in a first slot; and sending or receiving second sidelink information in a second slot, where the first slot is before the second slot; and when the first slot is adjacent to the second slot, beams corresponding to the first sidelink information and the second sidelink information are different, and a priority of the first sidelink information is lower than a priority of the second sidelink information, or when the first slot is adjacent to the second slot, and beams corresponding to the first sidelink information and the second sidelink information are different, the first sidelink information is carried on a preset quantity of symbols in the first slot, or there are a preset quantity of GAP symbols in the first slot, and a preset quantity is preconfigured, configured, or predefined.

In the method, the first sidelink information is carried on the preset quantity of symbols in the first slot, or there are the preset quantity of GAP symbols in the first slot. By controlling a value of the preset quantity, more time (symbols) can be reserved for beam switching, to reduce sidelink information transmission errors caused by untimely beam switching, namely, a beam switching delay.

In a possible design, at least one symbol in the GAP symbols is used to perform beam switching.

In a possible design, the method further includes: sending indication information to a peer device of the first sidelink information, or receiving indication information from a peer device of the first sidelink information, where the indication information indicates that the first sidelink information is carried on the preset quantity of symbols in the first slot, or there are the preset quantity of GAP symbols in the first slot.

In a possible design, channels on which the first sidelink information and the second sidelink information are located are physical sidelink feedback channels; or channels on which the first sidelink information and the second sidelink information are located are physical sidelink shared channels; or a channel on which the first sidelink information is located is a physical sidelink feedback channel, and a channel on which the second sidelink information is located is a physical sidelink shared channel; or a channel on which the first sidelink information is located is a physical sidelink shared channel, and a channel on which the second sidelink information is located is a physical sidelink feedback channel.

According to a forty-second aspect, this application provides a communication apparatus. The apparatus has a function of implementing the method according to the forty-first aspect. The function may be implemented by hardware, or may be implemented by executing corresponding software by hardware. The hardware or software includes one or more units or modules corresponding to the function of the method according to the forty-first aspect, for example, a transceiver unit and a processing unit.

The transceiver unit is configured to send or receive first sidelink information in a first slot; and send or receive second sidelink information in a second slot, where
the first slot is before the second slot; and when the first slot is adjacent to the second slot, beams corresponding to the first sidelink information and the second sidelink information are different, and a priority of the first sidelink information is lower than a priority of the second sidelink information, or when the first slot is adjacent to the second slot, and beams corresponding to the first sidelink information and the second sidelink information are different, the first sidelink information is carried on a preset quantity of symbols in the first slot, or there are a preset quantity of GAP symbols in the first slot, and a preset quantity is preconfigured, configured, or predefined.

Optionally, the processing unit is configured to determine the priority of the first sidelink information and the priority of the second sidelink information, and configured to determine a quantity of symbols for carrying the first sidelink information in the first slot.

In a possible design, at least one symbol in the GAP symbols is used to perform beam switching.

In a possible design, the transceiver unit is further configured to send indication information to a peer device of the first sidelink information, or receive indication information from a peer device of the first sidelink information, where the indication information indicates that the first sidelink information is carried on the preset quantity of symbols in the first slot, or there are the preset quantity of GAP symbols in the first slot.

In a possible design, channels on which the first sidelink information and the second sidelink information are located are physical sidelink feedback channels; or channels on which the first sidelink information and the second sidelink information are located are physical sidelink shared channels; or a channel on which the first sidelink information is located is a physical sidelink feedback channel, and a channel on which the second sidelink information is located is a physical sidelink shared channel; or a channel on which the first sidelink information is located is a physical sidelink shared channel, and a channel on which the second sidelink information is located is a physical sidelink feedback channel.

According to a forty-third aspect, this application further provides a communication apparatus, including a processor, configured to execute computer instructions stored in a memory. When the computer instructions are executed, the apparatus is enabled to perform the method according to any one of the forty-first aspect or the possible designs of the forty-first aspect.

According to a forty-fourth aspect, this application further provides a communication apparatus, including a processor and an interface circuit. The processor is configured to communicate with another apparatus through the interface circuit, and perform the method according to any one of the forty-first aspect or the possible designs of the forty-first aspect.

The communication apparatuses according to the forty-second aspect to the forty-fourth aspect may be used for a terminal device, for example, a first terminal device and a second terminal device.

According to a forty-fifth aspect, this application further provides a computer-readable storage medium, including computer software instructions. When the computer software instructions are run in a terminal device or a chip built in the terminal device, the terminal device is enabled to perform the method according to any one of the forty-first aspect or the possible designs of the forty-first aspect.

It may be understood that, for beneficial effects that can be achieved according to the forty-second aspect to the forty-fifth aspect, refer to the beneficial effects according to any one of the forty-first aspect or the possible designs of the forty-first aspect. Details are not described herein again.

According to a forty-sixth aspect, this application provides a communication method. The method includes: sending sidelink information to a second terminal device in a first slot, or receiving sidelink information from a second terminal device, where the first slot includes at least two consecutive GAP symbols.

In the method, it is defined that the slot includes at least two consecutive GAP symbols, and more time (symbols) may be reserved for beam switching, to reduce sidelink information transmission errors caused by untimely beam switching, namely, a beam switching delay.

According to a forty-seventh aspect, this application provides a communication apparatus. The apparatus has a function of implementing the method according to the forty-sixth aspect. The function may be implemented by hardware, or may be implemented by executing corresponding software by hardware. The hardware or software includes one or more units or modules corresponding to the function of the method according to the forty-sixth aspect, for example, a transceiver unit and a processing unit.

The transceiver unit is configured to send sidelink information to a second terminal device in a first slot, or receive sidelink information from a second terminal device in a first slot, where the first slot includes at least two consecutive GAP symbols.

Optionally, the processing unit is configured to select a time-frequency resource for sidelink information.

According to a forty-eighth aspect, this application further provides a communication apparatus, including a processor, configured to execute computer instructions stored in a memory. When the computer instructions are executed, the apparatus is enabled to perform the method according to any one of the forty-sixth aspect or the possible designs of the forty-sixth aspect.

According to a forty-ninth aspect, this application further provides a communication apparatus, including a processor and an interface circuit. The processor is configured to communicate with another apparatus through the interface circuit, and perform the method according to any one of the forty-sixth aspect or the possible designs of the forty-sixth aspect.

The communication apparatuses according to the thirty-seventh aspect to the thirty-ninth aspect may be used for a terminal device, for example, a first terminal device.

According to a fiftieth aspect, this application further provides a computer-readable storage medium, including computer software instructions. When the computer software instructions are run in a terminal device or a chip built in the terminal device, the terminal device is enabled to perform the method according to any one of the forty-sixth aspect or the possible designs of the forty-sixth aspect.

It may be understood that for beneficial effects that can be achieved according to the forty-seventh aspect to the fiftieth aspect, refer to the beneficial effects according to any one of the forty-sixth aspect or the possible designs of the forty-sixth aspect. Details are not described herein again.

According to a fifty-first aspect, this application further provides a communication apparatus, including a transceiver unit and a processing unit. The transceiver unit may be configured to receive and send information, or configured to communicate with another network element (for example, another terminal device). The processing unit may be configured to process data. For example, the apparatus may implement, through the transceiver unit and the processing unit, the method according to any one of the first aspect or the possible designs of the first aspect, the method according to any one of the sixth aspect or the possible designs of the sixth aspect, the method according to any one of the eleventh aspect or the possible designs of the eleventh aspect, the method according to any one of the sixteenth aspect or the possible designs of the sixteenth aspect, the method according to any one of the twenty-first aspect or the possible designs of the twenty-first aspect, the method according to any one of the twenty-sixth aspect or the possible designs of the twenty-sixth aspect, the method according to any one of the thirty-first aspect or the possible designs of the thirty-first aspect, the method according to any one of the thirty-sixth aspect or the possible designs of the thirty-sixth aspect, the method according to any one of the forty-first aspect or the possible designs of the forty-first aspect, or the method according to any one of the forty-sixth aspect or the possible designs of the forty-sixth aspect.

According to a fifty-second aspect, this application further provides a computer program product. When the computer program product is executed, the method according to any one of the first aspect or the possible designs of the first aspect, the method according to any one of the sixth aspect or the possible designs of the sixth aspect, the method according to any one of the eleventh aspect or the possible designs of the eleventh aspect, the method according to any one of the sixteenth aspect or the possible designs of the sixteenth aspect, the method according to any one of the twenty-first aspect or the possible designs of the twenty-first aspect, the method according to any one of the twenty-sixth aspect or the possible designs of the twenty-sixth aspect, the method according to any one of the thirty-first aspect or the possible designs of the thirty-first aspect, the method according to any one of the thirty-sixth aspect or the possible designs of the thirty-sixth aspect, the method according to any one of the forty-first aspect or the possible designs of the forty-first aspect, or the method according to any one of the forty-sixth aspect or the possible designs of the forty-sixth aspect may be implemented.

According to a fifty-third aspect, this application further provides a chip system. The chip system is used for a terminal device. The chip system includes one or more interface circuits and one or more processors. The interface circuit and the processor are interconnected through a line. The processor receives computer instructions from a memory of an electronic device through the interface circuit, and executes the computer instructions, to implement the method according to any one of the first aspect or the possible designs of the first aspect, the method according to any one of the sixth aspect or the possible designs of the sixth aspect, the method according to any one of the eleventh aspect or the possible designs of the eleventh aspect, the method according to any one of the sixteenth aspect or the possible designs of the sixteenth aspect, the method according to any one of the twenty-first aspect or the possible designs of the twenty-first aspect, the method according to any one of the twenty-sixth aspect or the possible designs of the twenty-sixth aspect, the method according to any one of the thirty-first aspect or the possible designs of the thirty-first aspect, the method according to any one of the thirty-sixth aspect or the possible designs of the thirty-sixth aspect, the method according to any one of the forty-first aspect or the possible designs of the forty-first aspect, or the method according to any one of the forty-sixth aspect or the possible designs of the forty-sixth aspect.

According to a fifty-fourth aspect, this application further provides a communication system, including a first terminal device and a second terminal device.

The first terminal device performs the method according to any one of the first aspect or the possible designs of the first aspect, or the method according to any one of the sixth aspect or the possible designs of the sixth aspect, and sends sidelink information to the second terminal device.

Alternatively, the second terminal device performs the method according to any one of the eleventh aspect or the possible designs of the eleventh aspect, and the first terminal device performs the method according to any one of the sixteenth aspect or the possible designs of the sixteenth aspect.

Alternatively, the second terminal device performs the method according to any one of the twenty-first aspect or the possible designs of the twenty-first aspect, and the first terminal device performs the method according to any one of the twenty-sixth aspect or the possible designs of the twenty-sixth aspect.

Alternatively, the second terminal device performs the method according to any one of the thirty-first aspect or the possible designs of the thirty-first aspect, and the first terminal device performs the method according to any one of the thirty-sixth aspect or the possible designs of the thirty-sixth aspect.

Alternatively, the first terminal device performs the method according to any one of the forty-first aspect or the possible designs of the forty-first aspect, or the method according to any one of the forty-sixth aspect or the possible designs of the forty-sixth aspect, and sends sidelink information to the second terminal device.

It may be understood that, for beneficial effects that can be achieved according to the fifty-first aspect to the fifty-fourth aspect, refer to the beneficial effects according to the first aspect to the fiftieth aspect, and the like. Details are not described herein again.

### BRIEF DESCRIPTION OF DRAWINGS

FIG. 1 is a diagram of an SL UE communication scenario;
FIG. 2 is a diagram of another SL UE communication scenario;
FIG. 3 is a diagram of still another SL UE communication scenario;
FIG. 4 is a diagram of still another SL UE communication scenario;
FIG. 5 is a diagram of composition of a terminal device according to an embodiment of this application;
FIG. 6 is a schematic flowchart of a communication method according to an embodiment of this application;
FIG. 7 is a diagram of a resource selection procedure according to an embodiment of this application;
FIG. 8 is a diagram of a resource selection window and a sensing window according to an embodiment of this application;
FIG. 9 is a diagram of another resource selection procedure according to an embodiment of this application;
FIG. 10 is another schematic flowchart of a communication method according to an embodiment of this application;
FIG. 11 is a diagram of transmission of different sidelink information according to an embodiment of this application;
FIG. 12 is still another schematic flowchart of a communication method according to an embodiment of this application;
FIG. 13 is still another schematic flowchart of a communication method according to an embodiment of this application;
FIG. 14 is still another schematic flowchart of a communication method according to an embodiment of this application;
FIG. 15 is a diagram of a symbol for carrying sidelink information according to an embodiment of this application;
FIG. 16 is a diagram of a structure of a symbol according to an embodiment of this application;
FIG. 17 is a diagram of a structure of a communication apparatus according to an embodiment of this application;
FIG. 18 is another diagram of a structure of a communication apparatus according to an embodiment of this application;
FIG. 19 is still another diagram of a structure of a communication apparatus according to an embodiment of this application;
FIG. 20 is still another diagram of a structure of a communication apparatus according to an embodiment of this application;
FIG. 21 is still another diagram of a structure of a communication apparatus according to an embodiment of this application;
FIG. 22 is still another diagram of a structure of a communication apparatus according to an embodiment of this application;
FIG. 23 is still another diagram of a structure of a communication apparatus according to an embodiment of this application;
FIG. 24 is still another diagram of a structure of a communication apparatus according to an embodiment of this application;
FIG. 25 is still another diagram of a structure of a communication apparatus according to an embodiment of this application; and
FIG. 26 is still another diagram of a structure of a communication apparatus according to an embodiment of this application.

### DESCRIPTION OF EMBODIMENTS

A device-to-device (device-to-device, D2D) communication technology is a technology in which two or more user equipments (user equipment, UE) directly communicate with each other. Direct communication can be performed with/without a network infrastructure, to reduce load of a cellular network, reduce battery power consumption of the user equipment, increase a data rate, and can well meet a requirement of a proximity service. For example, common D2D devices may include Bluetooth, Wi-Fi-direct (Wi-Fi-direct), and the like.

In D2D communication, a PC5 interface or a Uu interface may be used for communication. The PC5 interface is an interface or an air interface (air interface) for direct communication between UEs, and may perform communication between a physical layer and a data link layer without relaying of a base station or a network device. The Uu interface is a device-to-network (device-to-network) interface. A core network and a base station device in a communication system can be used to implement communication between a device and a network, and data transmission and management are performed by using the network.

From the perspective of a link, links for communication between a UE and a base station may be defined as an uplink (uplink) and a downlink (downlink). The UE may send, on the uplink, data to the base station, or receive, on the downlink, data delivered by the base station. A link for direct communication between UEs through the PC5 interface may be defined as a sidelink (sidelink, SL), and communication of the PC5 interface is also referred to as SL communication.

For example, the Uu interface may be used for communication between the UE and the network, to implement functions such as location tracking, network management, and security authentication of the UE. SL communication may be used to implement application scenarios such as resource sharing and coordination communication between adjacent devices. For example, SL communication may be used for communication in vehicle-to-everything (vehicle-to-everything, V2X) and between intelligent terminals. V2X is communication between a vehicle and another vehicle or a device that may affect the vehicle, and may include vehicle to vehicle (vehicle to vehicle, V2V) communication, vehicle to pedestrian (vehicle to pedestrian, V2P) communication, vehicle to infrastructure (vehicle to infrastructure, V2I) communication, and the like. Communication between intelligent terminals may include communication between a mobile phone and a wearable device, communication between an AR/VR helmet or glasses and a smart screen, communication between sensors, and the like.

In a wireless communication system, frequency bands may be classified into a licensed frequency band and an unlicensed frequency band based on different frequency bands that are used. In the licensed frequency band, the UE may use a spectrum resource based on scheduling of a central node (for example, a base station). A listen-before-talk (listen-before-talk, LBT) mechanism is introduced into the wireless communication system, so that Uu interface communication in the unlicensed frequency band is enabled. A 4G long term evolution (long term evolution, LTE) system is used as an example. The LBT mechanism is introduced into the LTE system, so that the LTE system and a Wi-Fi device that uses the unlicensed frequency band can coexist. Similar to the Uu interface, SL communication in the unlicensed frequency band is enabled in local-area space, and a corresponding protocol technology may be collectively referred to as SL-U. The UE operating by using SL-U may also coexist with a nearby Wi-Fi device based on the LBT mechanism.

For example, a spectrum used for SL communication may be the licensed frequency band, the unlicensed frequency band, or a dedicated frequency band. For example, the UE may perform SL communication with another UE by using the licensed frequency band in a manner of scheduling by the base station. In this case, a time-frequency resource used for SL communication may be referred to as a licensed resource. Alternatively, the UE may perform communication without using a base station scheduling mode, and the UE performs autonomous resource selection, and performs SL communication with another UE by using the unlicensed frequency band. In this case, a time-frequency resource used for SL communication may be referred to as an unlicensed resource.

In the communication system, a higher data transmission rate and a lower delay can be met by using a plurality of technologies including beamforming (also referred to as beam forming) and switch. Beamforming is a technology in which stronger or weaker signal beams are formed by changing phases and amplitudes of transmit and receive antennas. Beams may be classified into a transmit beam and a receive beam, and beamforming includes transmit beamforming and receive beamforming.

Transmit beamforming means that when a transmit-side device with an antenna array sends a signal, a specific amplitude and phase are set on each antenna element of the antenna array, so that the sent signal has specific spatial directivity, that is, has a high signal power in some directions, and has a low signal power in some other directions. A direction with a highest signal power is a direction of a transmit beam. The antenna array includes a plurality of antenna elements. The additional specific amplitude and phase are a beamforming weight.

Receive beamforming means that when a receive-side device with an antenna array receives a signal, a specific amplitude and phase are set on each antenna element of the antenna array, so that a power gain of the received signal is directional. That is, the power gain is high when the signal is received in some directions, and the power gain is low when the signal is received in some other directions. A direction with a highest power gain when the signal is received is a direction of a receive beam. The antenna array includes a plurality of antenna elements. The additional specific amplitude and phase are a beamforming weight.

In SL communication, the UE may send information to another UE through the transmit beam or receive information from another UE through the receive beam by using the beamforming technology. Information transmitted in SL communication may be referred to as sidelink information. Generally, the UE used in the D2D technology is a half-duplex device, that is, the UE can only be in a state of receiving sidelink information or a state of sending sidelink information at a same moment, and does not have a capability of simultaneous receiving and sending. When the UE performs SL communication, beams used for different sidelink information may be different (for example, beamforming weights are different or beam directions are different), and the UE needs to perform beam switching.

For example, the UE may send or receive sidelink information 1 through a beam 1, and send or receive sidelink information 2 through a beam 2. When switching from sending or receiving the sidelink information 1 to sending or receiving the sidelink information 2, the UE needs to switch from the beam 1 to the beam 2.

It may be understood that, that the UE performs beam switching may include: performing beam switching (transmit-transmit switch for short) for sending different sidelink information, performing beam switching (receive-receive switch for short) for receiving different sidelink information, performing beam switching (transmit-receive switch for short) for switching from sending sidelink information to receiving sidelink information, performing beam switching (receive-transmit switch for short) for switching from receiving sidelink information to sending sidelink information, and the like.

For the UE, due to a limitation of a hardware resource (for example, a processing capability, a memory, or a power), a quantity of times that the UE is capable of performing beam switching in one slot (slot) is limited. The quantity of times that the UE is capable of performing beam switching in one slot may be considered as a beam switching capability of the UE. Different UEs may have different beam switching capabilities. For different subcarrier spacings (subcarrier spacing, SCS), the UE may support different beam switching capabilities. A subcarrier is a basic unit used for data transmission, and may be combined into different physical channels and resource blocks, to implement data transmission and scheduling. A subcarrier spacing (SCS) is a frequency spacing between two adjacent subcarriers.

A new radio (new radio, NR) system is used as an example. The following Table 1 provides an example of beam switching capabilities of different UEs for some subcarrier spacings.

**Table 1**

| SCS (kHz) | Maximum quantity/quantity of times of receive and transmit beam switching |
|---|---|
| 60 | 4, 7, 14 |
| 120 | 4, 7, 14 |
| 240 | 4, 7, 14 |
| 480 | 2, 4, 7 |
| 960 | 1, 2, 4, 7 |

As shown in Table 1, when the subcarrier spacing is 60 kilohertz (kHz), 120 kHz, or 240 kHz, the maximum quantity of times of receive and transmit beam switching of the UE in one slot may be 4, 7, or 14; when the subcarrier spacing is 480 kHz, the maximum quantity of times of receive and transmit beam switching of the UE in one slot may be 2, 4, or 7; or when the subcarrier spacing is 960 kHz, the maximum quantity of times of receive and transmit beam switching of the UE in one slot may be 1, 2, 4, or 7. The maximum quantity of times of receive (Rx) and transmit (Tx) beam switching of the UE in one slot may also be defined as "maxNumberRxTxBeamSwitchDL".

Currently, when the UE performs SL communication, a beam switching capability of the UE may not meet beam switching between different sidelink information. As a result, the UE misses receiving or sending of some signals of the sidelink information due to untimely beam switching. For example, when switching from sending or receiving the sidelink information 1 to sending or receiving the sidelink information 2, the UE needs to switch from the beam 1 to the beam 2. When the beam switching capability of the UE cannot meet beam switching between the sidelink information 1 and the sidelink information 2, the UE may miss receiving or sending of some signals of the sidelink information 2.

Therefore, embodiments of this application provide a communication method. The method may include: excluding, from a first candidate resource set, N time units adjacent to a first time-frequency resource in the time domain, to obtain a second candidate resource set, where N is a positive integer greater than 0, and the first time-frequency resource is used to receive or send first sidelink information; determining a second time-frequency resource based on the second candidate resource set; and sending second sidelink information to a second terminal device on the second time-frequency resource.

In the method, when a UE needs to send sidelink information (for example, the second sidelink information) to another UE, the UE may determine, in a resource selection window, a candidate resource used to send the second sidelink information, to obtain the first candidate resource set, exclude, from the first candidate resource set, the N time units adjacent to the first time-frequency resource in the time domain, to obtain the second candidate resource set, determine the second time-frequency resource based on the second candidate resource set, and send the second sidelink information to the another UE (for example, the second terminal device) on the second time-frequency resource. The first time-frequency resource is a time-frequency resource used by the UE to receive or send the first sidelink information. Before determining the second time-frequency resource, the UE excludes the N time units adjacent to the first time-frequency resource in the time domain, so that the second time-frequency resource and the first time-frequency resource may be non-adjacent (or separated by at least the N time units), and the N time units can be reserved to perform beam switching for transmission of the first sidelink information and the second sidelink information, to reduce sidelink information transmission error caused by untimely beam switching.

Optionally, the time unit in embodiments of this application may include a slot, a symbol (for example, an OFDM symbol), or a subframe. In the following embodiments of this application, a slot is used as an example of a time unit. However, it should be understood that the slot mentioned in the following embodiments may also be replaced with a symbol or a subframe. A granularity of the time unit is not limited in this application.

Embodiments of this application are applicable to a scenario in which information is transmitted between UEs in SL communication. All UEs performing SL communication may be within network coverage, or may not be within network coverage, or one UE may be within network coverage, and the other UE may not be within network coverage.

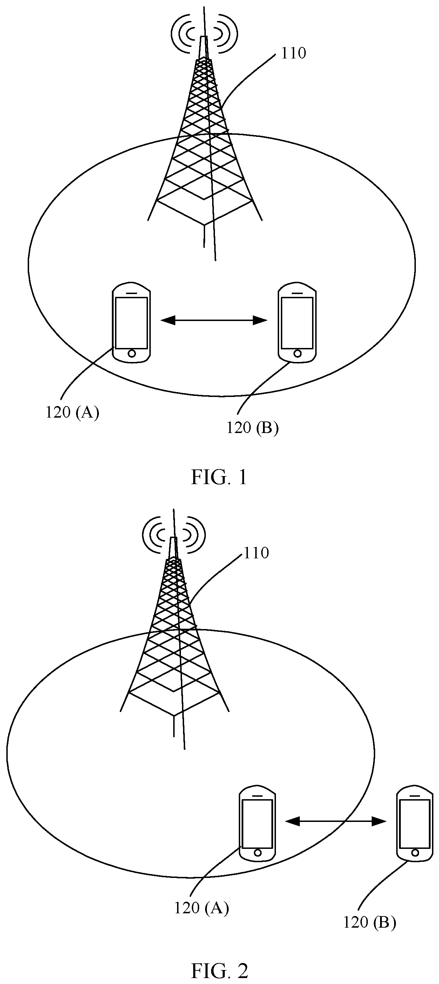

For example, FIG. 1 is a diagram of an SL UE communication scenario. As shown in FIG. 1, in a possible example, the SL UE communication scenario may include a network device 110 and UEs 120. The UEs 120 may include a UE-A and a UE-B, and the UE-A and the UE-B may perform SL communication. Both the UE-A and the UE-B may be within network coverage of the network device 110.

For another example, FIG. 2 is a diagram of another SL UE communication scenario. As shown in FIG. 2, in another possible example, the SL UE communication scenario may include a network device 110 and UEs 120. The UEs 120 may include a UE-A and a UE-B, and the UE-A and the UE-B may perform SL communication. The UE-A may be within network coverage of the network device 110, and the UE-B may not be within network coverage of the network device 110.

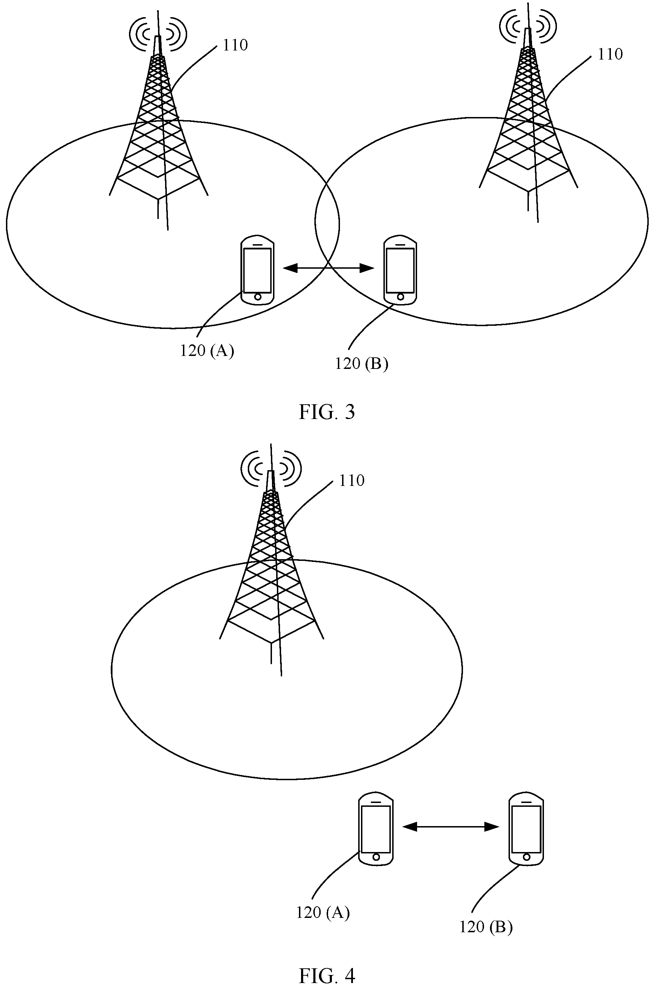

For another example, FIG. 3 is a diagram of still another SL UE communication scenario. As shown in FIG. 3, in still another possible example, the SL UE communication scenario may include network devices 110 and UEs 120. The UEs 120 may include a UE-A and a UE-B, and the UE-A and the UE-B may perform SL communication. The UE-A may be within network coverage of one network device 110, the UE-B may be within network coverage of another network device 110, and the UE-A and the UE-B may be within network coverage of different network devices 110.

For another example, FIG. 4 is a diagram of still another SL UE communication scenario. As shown in FIG. 4, in still another possible example, the SL UE communication scenario may include a network device 110 and UEs 120. The UEs 120 may include a UE-A and a UE-B, and the UE-A and the UE-B may perform SL communication. Both the UE-A and the UE-B may not be within network coverage of the network device 110.

For the SL UE communication scenarios shown in FIG. 1 to FIG. 3, in an implementation, the UE-A may use an SL to communicate with the UE-B in a manner of scheduling by the network device 110, and a resource for communication between the UE-A and the UE-B may be referred to as a licensed resource or a licensed frequency band. In another implementation, a manner of scheduling by the network device 110 may not be used. The UE-A performs autonomous resource selection, selects a resource used for SL communication from a resource pool, and communicates with the UE-B. The resource for communication between the UE-A and the UE-B may be referred to as an unlicensed resource or an unlicensed frequency band.

For the SL UE communication scenario shown in FIG. 4, the UE-A may perform autonomous resource selection, select a resource used for SL communication from a resource pool, and communicate with the UE-B. The resource for communication between the UE-A and the UE-B may be referred to as an unlicensed resource or an unlicensed frequency band.

It should be understood that the resource in embodiments of this application is a time-frequency resource.

Embodiments of this application are applicable to a manner in which the UE-A autonomously selects the resource used for SL communication from the resource pool, and communicates with the UE-B in any SL UE communication scenario in FIG. 1 to FIG. 4. It may be understood that alternatively, the UE-B may perform autonomous resource selection, select the resource used for SL communication from the resource pool, and communicate with the UE-A.

For example, the network device 110 may also be referred to as a radio access network device or a next-generation radio access network device, for example, a base station. The UE may communicate with the network device 110. The network device 110 may provide function services such as radio resource management, quality of service management, and data encryption and compression for the UE. Different network devices 110 may communicate with each other through an Xn interface. Different UEs may perform information exchange and communication via the network device 110.

Optionally, in embodiments of this application, the network device 110 may include a macro base station, a micro base station (also referred to as a small cell), or the like in various forms. For example, the network device 110 may include: a base station in wideband code division multiple access (wideband code division multiple Access, WCDMA) or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a base band unit (base band unit, BBU), a wireless fidelity (wireless fidelity, Wi-Fi) access point (access point, AP), or the like.

Optionally, the UE 120 in embodiments of this application may also be referred to as a terminal device, a mobile station (mobile station, MS), a mobile terminal (mobile terminal, MT), or the like. The terminal device may be a device that provides a user with voice and/or data connectivity, for example, may be a mobile phone (a "cellular" phone), a smartphone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld compute device, a satellite wireless device, a wireless modem card, a television set-top box (set top box, STB), a customer premise equipment (customer premise equipment, CPE), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), and another device used for communication in a wireless system, for example, another MTC terminal in the IoT. A specific representation form of the terminal device is not limited in this application.

In embodiments of this application, a communication system in which SL communication is performed may be a WCDMA system, an LTE system, a long term evolution-advanced LTE-A (LTE advanced) system, an LTE frequency division duplex (frequency division duplex, FDD) system, a universal mobile telecommunications system (universal mobile telecommunications system, UMTS), a 5G NR system, another wireless communication system to which an OFDM technology is applied, a future 6th generation mobile information technology (6th generation mobile communication technology, 6G) network communication system, or the like. A specific type of the communication system is not limited in this application.

For example, when the communication system is a 5G NR system, the communication system may further include a core network device, and the core network device may communicate with the network device through a next generation (next generation, NG) interface.

It may be understood that the communication system is merely intended to describe the technical solutions in embodiments of this application more clearly, and does not constitute a limitation on the technical solutions provided in embodiments of this application. For example, the communication system may further include another device, for example, a network control device. The network control device may be an operation, administration and maintenance (operation, administration and maintenance, OAM) system, which is also referred to as a network management system. The network control device may manage the foregoing network device.

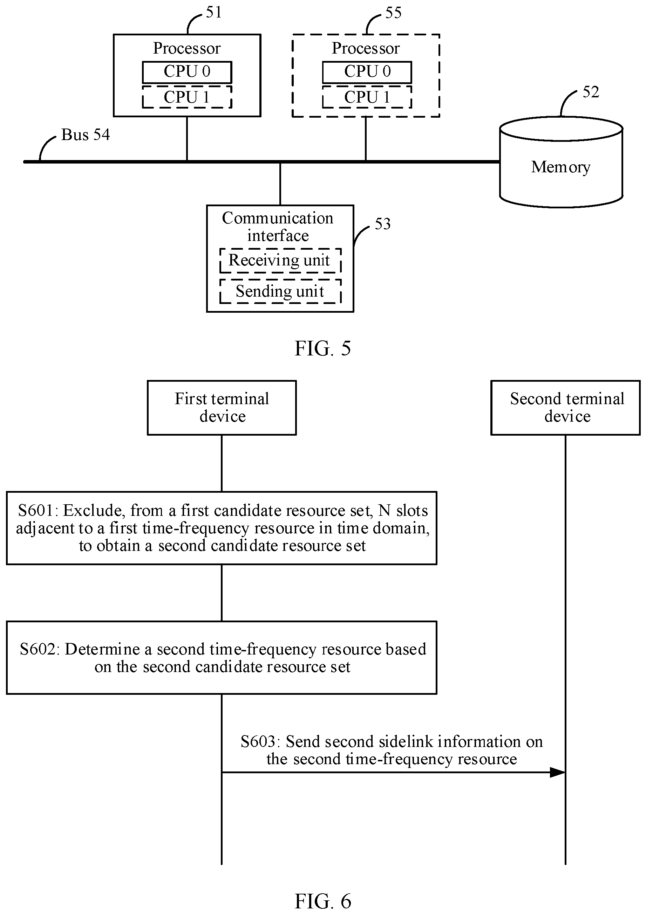

For example, FIG. 5 is a diagram of composition of a terminal device according to an embodiment of this application. The terminal device may be the UE-A or the UE-B described above, or any terminal device described in embodiments of this application, for example, the first terminal device or the second terminal device. As shown in FIG. 5, the terminal device may include at least one processor 51, a memory 52, a communication interface 53, and a bus 54.

The processor 51 is a control center of the terminal device, and may be one processor, or may be a collective term for a plurality of processing elements. For example, the processor 51 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processor, DSP), or one or more field programmable gate arrays (field programmable gate array, FPGA).

The processor 51 may run or execute a software program stored in the memory 52, and invoke data stored in the memory 52, to perform various functions of the terminal device. For example, when the terminal device has a structure of the first terminal device, the terminal device may perform the steps performed by the first terminal device in the communication method provided in embodiments of this application. For another example, when the terminal device has a structure of the second terminal device, the terminal device may perform the steps performed by the second terminal device in the communication method provided in embodiments of this application.

During specific implementation, in an embodiment, the processor 51 may include one or more CPUs, for example, a CPU 0 and a CPU 1 shown in FIG. 5.

During specific implementation, in an embodiment, the terminal device may include a plurality of processors, for example, the processor 51 and a processor 55 shown in FIG. 5. Each of the processors may be a single-core processor (single-CPU), or may be a multi-core processor (multi-CPU). The processor herein may be one or more devices, circuits, and/or processing cores configured to process data (for example, computer program instructions).

The memory 52 may store a software program of the method steps performed by the terminal device, and the processor 51 controls execution of the software program. The memory 52 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto.

The memory 52 may exist independently, and is connected to the processor 51 through the bus 54. Alternatively, the memory 52 may be integrated with the processor 51. This is not limited herein.

The communication interface 53 is configured to communicate with another device or a communication network by using any transceiver-type apparatus. The communication interface 53 may be an Ethernet interface, a radio access network (radio access network, RAN) interface, a wireless local area network (wireless local area network, WLAN) interface, or the like. The communication interface 53 may include a receiving unit to implement a receiving function and a sending unit to implement a sending function.

The bus 54 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 5, but this does not mean that there is only one bus or only one type of bus.

Although the bus 54 is used in FIG. 5, it may be understood that the bus may also be replaced with a connection relationship in another form, and is not limited to the bus.

The following uses an example in which the first terminal device (for example, the UE-A) sends sidelink information to the second terminal device (for example, the UE-B) to describe, with reference to the accompanying drawings, the communication method provided in embodiments of this application. The first terminal device may be referred to as a transmit-side UE or a T_{X} UE, and the second terminal device may be referred to as a receive-side UE or an R_{X} UE.

It should be understood that with evolution of the network architecture and emergence of a new service scenario, the technical solutions provided in embodiments of this application are also applicable to similar technical problems.

It should be noted that, in the descriptions of this application, words such as "first" and "second" are merely used for distinguishing description, and are not used to specifically limit a feature. In the descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In embodiments of this application, only fewer steps than all steps may be performed, or more steps may be performed. This is not limited.

FIG. 6 is a schematic flowchart of a communication method according to an embodiment of this application. As shown in FIG. 6, a slot is used as an example of a time unit. The communication method may include S601 to S603.

S601: Exclude, from a first candidate resource set, N time units adjacent to a first time-frequency resource in the time domain, to obtain a second candidate resource set, where the time unit may be a slot, a subframe, or a symbol.

In FIG. 6, a slot is used as an example of a time unit.

For example, S601 to S603 may be performed by a communication apparatus or a first terminal device. The communication apparatus or the terminal device may be a UE, a vehicle, a road side unit (Road Side Unit, RSU), a telematics box (Telematics Box, T-Box), or the like. Alternatively, the communication apparatus or the terminal device may be a communication apparatus disposed in a vehicle, for example, a vehicle-mounted module, a vehicle-mounted assembly, or a vehicle-mounted chip.

N is a positive integer greater than 0, and the first time-frequency resource is used to receive or send first sidelink information.

For example, when the first terminal device needs to send second sidelink information to a second terminal device, it may perform autonomous resource selection. The first terminal device may autonomously select, within a resource selection window, a transmission resource for communication based on a sensing result within a sensing window (also referred to as a listening window) of the first terminal device. A mechanism in which the terminal device performs autonomous resource selection may be referred to as an autonomous user selection resource mode or a mode 2 (mode 2).

The first candidate resource set may be a set of all available candidate time-frequency resources that are initialized in the resource selection window when the first terminal device performs autonomous resource selection. The first candidate resource set may be referred to as *S*_{A}.

A time-frequency resource that is available for or is used by the first terminal device for communication may be referred to as the first time-frequency resource. For example, the first time-frequency resource is used by the first terminal device to send first sidelink information to another terminal device (including the second terminal device), or the first time-frequency resource is used by the first terminal device to receive first sidelink information sent by another terminal device (including the second terminal device).

For example, assuming that the first terminal device is a UE 1, when the UE 1 sends sidelink information 1 to a UE 3 on a time-frequency resource, or when the UE 1 reserves a time-frequency resource to send sidelink information 1 to a UE 3, the time-frequency resource used to send the sidelink information 1 is the first time-frequency resource related to the UE 1. Alternatively, when the UE 1 receives sidelink information 2 sent by a UE 3 on a time-frequency resource, or when a UE 3 reserves a time-frequency resource to send sidelink information 2 to the UE 1, the time-frequency resource used to receive the sidelink information 2 is the first time-frequency resource related to the UE 1. The sidelink information 1 and the sidelink information 2 may be referred to as the first sidelink information.

It should be understood that the N time units that are adjacent to the first time-frequency resource in the time domain and that are excluded from the first candidate resource set are located in the resource selection window. In other words, when excluding the N time units adjacent to the first time-frequency resource in the time domain, these N time units are excluded from the set of all the available candidate time-frequency resources that are initialized in the resource selection window.

For example, the first terminal device (for example, the UE 1) may determine the first time-frequency resource by sensing a resource reserved by using sidelink control information (sidelink control information, SCI) of another terminal device (for example, another UE). For example, the UE 2 reserves several time-frequency resources in SCI, and indicates that the UE 2 is to send information to the UE 1 on the reserved several time-frequency resources. In this case, for the UE 1, the several time-frequency resources may be first time-frequency resources.

Alternatively, the first time-frequency resource may be determined by the first terminal device. For example, before current resource selection, a resource reserved by the first terminal device for performing a resource selection process for transmission of another TB may be the first time-frequency resource. The first time-frequency resource may be provided by a higher layer. The higher layer of the first terminal device may know specific resources that have been selected previously. For the resource selection process and a meaning of the higher layer, refer to descriptions in the following embodiments.

In a possible design, the first time-frequency resource may include a time-frequency resource used by the first terminal device to send the first sidelink information to the another terminal device.

In another possible design, the first time-frequency resource may include a time-frequency resource used by the first terminal device to receive the first sidelink information sent by the another terminal device.

In still another possible design, the first time-frequency resource may include a time-frequency resource used by the first terminal device to send the first sidelink information to the another terminal device, and a time-frequency resource used by the first terminal device to receive the first sidelink information sent by the another terminal device.

Similarly, for a time-frequency resource related to the another terminal device (a non-first terminal device), refer to a definition of the time-frequency resource related to the first terminal device. Details are not described again.

An idle time-frequency resource is a time-frequency resource that is not used or reserved by any terminal device.

After determining the first candidate resource set, the first terminal device may exclude, from the first candidate resource set, N slots adjacent to the first time-frequency resource in the time domain, and remaining candidate time-frequency resources after the exclusion may form the second candidate resource set. The N slots adjacent to the first time-frequency resource in the time domain may be time-frequency resources of the N slots adjacent to the first time-frequency resource in the time domain. It may be understood that idle time-frequency resources may include the time-frequency resources of the N slots adjacent to the first time-frequency resource in the time domain.

For example, N may be a positive integer, for example, 1, 2, 3, or 4. A value of N is not limited in this embodiment.

For example, the first time-frequency resource is a time-frequency resource of a first slot. The N slots adjacent to the first time-frequency resource in the time domain may include N slots adjacent before the first slot and/or N slots adjacent after the first slot.

For example, when the first slot is a slot 2, and N is 1, the N slots adjacent to the first time-frequency resource in the time domain may include a slot 1 adjacent before the slot 2 and a slot 3 adjacent after the slot 2.

After obtaining the second candidate resource set, the first terminal device may perform S602, to select, from the second candidate resource set, a time-frequency resource used to send the second sidelink information.

Optionally, the first time-frequency resource may be further excluded from the first candidate resource set.

It should be understood that, if the first time-frequency resource needs to be excluded, the first time-frequency resource in this case is in the resource selection window, in other words, the first time-frequency resource included in the set is excluded from the set of all the available candidate time-frequency resources that are initialized in the resource selection window.

S602: Determine a second time-frequency resource based on the second candidate resource set.

For example, the first terminal device may select a proper beam for the second sidelink information, and select a proper time-frequency resource for the beam of the second sidelink information from the second candidate resource set based on content of the second sidelink information, such as a data amount, a transmission rate, and a delay requirement.

S603: Send the second sidelink information to the second terminal device on the second time-frequency resource.

For example, the second time-frequency resource may include a time domain resource and a frequency domain resource, and the second terminal device may send the second sidelink information to the second terminal device on the second time-frequency resource.

Correspondingly, the second terminal device may receive the second sidelink information on the second time-frequency resource.

Before sending the second sidelink information to the second terminal device, the first terminal device may further send sidelink control information (sidelink control information, SCI) to the second terminal device, to indicate the second terminal device to receive the second sidelink information on the second time-frequency resource.

In this embodiment of this application, when selecting a time-frequency resource used to send the second sidelink information, the first terminal device excludes, from the first candidate resource set, the N slots adjacent to the first time-frequency resource in the time domain, to obtain the second candidate resource set, and determines, based on the second candidate resource set, the second time-frequency resource used to send the second sidelink information, so that the selected second time-frequency resource and the first time-frequency resource may be non-adjacent or separated by at least the N slots, and more time is reserved for beam switching, to reduce sidelink information transmission errors caused by untimely beam switching, namely, a beam switching delay.

For example, the UE 1 sends the sidelink information 1 to the UE 3 in the slot 1. When the UE 1 sends the sidelink information 2 to the UE 2 in the slot 2 adjacent to the slot 1, the UE 1 may need to perform beam switching in the slot 1, for example, switch from a beam 1 to a beam 2. However, there is a specific delay in beam switching, and the sidelink information 2 sent in the slot 2 may miss sending of some signals. However, in this embodiment of this application, considering a delay required for beam switching, when selecting a slot for sending the sidelink information 2, the UE 1 may exclude the slot 1 and N slots adjacent to the slot 1 in advance, for example, exclude the slot 2, and send the sidelink information 2 in the slot 3, so that more time is reserved for beam switching in the slot 2, to reduce transmission errors of the sidelink information 2.

In a possible design, N may be preconfigured, configured, or predefined.

For example, in an implementation, a value of N may be preconfigured in hardware and/or software of the first terminal device, for example, recorded/written in advance, and may be changed by using software or hardware.

For another example, in another implementation, a value of N may be configured by a network device (for example, a base station) for the first terminal device by using a system information block (system information block, SIB) message, radio resource control (radio resource control, RRC) signaling, or a master information block (master information block, MIB) message, for example, recorded/written into hardware and/or software of the first terminal device.

For another example, in still another implementation, a value of N may be configured by another device (for example, another terminal device) for the first terminal device by using PC5-RRC signaling.

For another example, in still another implementation, a value of N does not need to be configured by another device, and may be information predefined (which may be recorded/written in advance) in hardware and/or software of the first terminal device, or may be understood as information that cannot be changed by a network device or another terminal device. In other words, N may be predefined in the first terminal device in a standard or protocol manner.

An implementation of N is not limited in this application.

In a possible design, a value of N may be related to a beam switching capability of the first terminal device. To be specific, determining of the value of N needs to ensure that the first terminal device can complete beam switching in the determined N time units. The beam switching capability of the first terminal device indicates a quantity of times that the first terminal device is capable of performing beam switching in one slot.

For example, for the beam switching capability of the first terminal device, refer to Table 1 above. A quantity of times that the UE is capable of performing beam switching in one slot (slot) is limited. For different subcarrier spacings (subcarrier spacing, SCS), the UE may support different beam switching capabilities.

In this embodiment, the value of N may be determined based on the beam switching capability of the first terminal device. When the first terminal device can complete beam switching in one slot, the value of N may be 1. When the first terminal device cannot complete beam switching in one slot, the value of N may be a quantity of slots required by the first terminal device to complete beam switching. For example, when 1.5 slots are required by the first terminal device to complete beam switching, the quantity of slots required by the first terminal device to complete beam switching is 2, and N may be 2. In other words, the first terminal device may exclude a time-frequency resource adjacent to the first time-frequency resource based on a slot granularity.

In this embodiment, the value of N is determined based on the beam switching capability of the first terminal device, so that sufficient time can be reserved for beam switching between the second time-frequency resource selected by the first terminal device and the first time-frequency resource, to meet a switch capability requirement of the UE, and further reduce a probability of the sidelink information transmission errors caused by the untimely beam switching, namely, the beam switching delay. In addition, a quantity of excluded adjacent slots may be further controlled to be within a proper range, to reduce a waste of time-frequency resources and improve resource utilization.

Optionally, when the value of N is related to the beam switching capability of the first terminal device, N may be preconfigured or configured in the manner described in the foregoing embodiment, or predefined in the first terminal device, or may be determined by the first terminal device based on the beam switching capability of the first terminal device. This is not limited herein.

In a possible design, the N slots adjacent to the first time-frequency resource in the time domain are used to perform beam switching before or after the first sidelink information is sent or received.

It may be understood that the first terminal device may receive or send other sidelink information (for example, the second sidelink information) before or after sending or receiving the first sidelink information. The N slots adjacent to the first time-frequency resource in the time domain may include N slots before the slot in which the first time-frequency resource is located and/or N slots after the slot in which the first time-frequency resource is located.

After completing transmission of sidelink information (for example, the sidelink information 1) before the first sidelink information, the first terminal device may perform beam switching to send or receive the first sidelink information. Time for performing beam switching may be a last orthogonal frequency division multiplexing (orthogonal frequency division multiplexing, OFDM) symbol in a slot of the sidelink information 1, also referred to as a GAP (GAP) symbol, and/or a part or all of OFDM symbols in the N slots before the slot in which the first time-frequency resource is located.

Alternatively, after completing transmission of the first sidelink information, the first terminal device may perform beam switching to send or receive sidelink information (for example, the sidelink information 2) after the first sidelink information. Time for performing beam switching may be a last OFDM symbol in a slot of the first sidelink information, and/or a part or all of OFDM symbols in the N slots after the slot in which the first time-frequency resource is located.

In other words, in this embodiment of this application, the excluded N slots adjacent to the first time-frequency resource in the time domain may be used to perform beam switching before or after the first sidelink information is sent or received. However, beam switching may occupy a part or all of OFDM symbols in the N slots, or may not occupy an OFDM symbol in the N slots. Whether beam switching occupies the OFDM symbol in the N slots, or a quantity of OFDM symbols that are occupied in the N slots depends on whether N is related to the beam switching capability of the first terminal device. For details, refer to the descriptions in the foregoing embodiment.

Optionally, when a beam of the sidelink information before or after the first sidelink information is the same as a beam of the first sidelink information, the first terminal device may not perform beam switching.

In a possible design, the second candidate resource set may be determined by a physical layer of the first terminal device. In other words, the first terminal device may exclude, at the physical layer, the first time-frequency resource and the N slots adjacent to the first time-frequency resource in the time domain, to obtain the second candidate resource set. When the value of N is related to the beam switching capability of the first terminal device, the N slots adjacent to the first time-frequency resource in the time domain may also be referred to as slots or time-frequency resources that are limited by the beam switching capability.

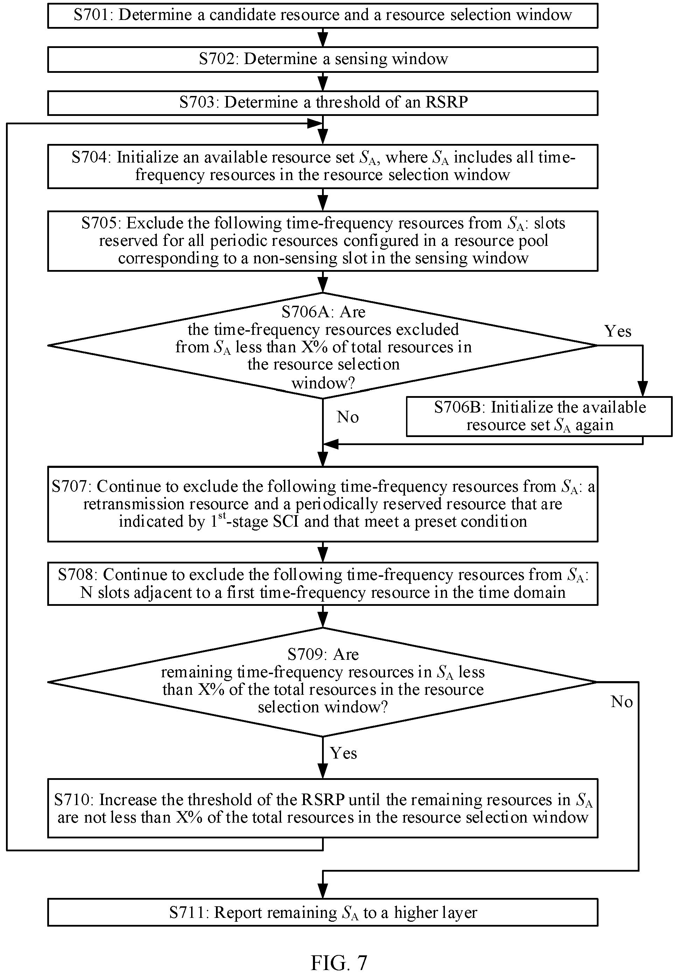

For example, a first terminal device (also referred to as a transmit-side UE or a T_{X} UE) triggers resource selection in a slot n. FIG. 7 is a diagram of a resource selection procedure according to an embodiment of this application. As shown in FIG. 7, the procedure in which the first terminal device performs resource selection may include S701 to S711. The following S701 to S711 do not represent an actual execution sequence. For example, S702 may be first determined, and then S701 is determined.

S701: Determine a candidate resource *R*_{*x*,*y*} and a resource selection window [*n* + *T*₁, *n* + *T*₂].

For example, a higher layer (for example, an application layer) of the first terminal device may notify a physical layer to perform resource selection, to send second sidelink information. Notification time may be the slot n. The physical layer triggers resource selection in the slot n. After resource selection is triggered, the candidate resource *R*_{*x*,*y*} and the resource selection window [*n* + *T*₁, *n* + *T*₂] may be first determined.

The candidate resource *R*_{*x*,*y*} may be used to describe resource allocation at a moment and a location. *x* may represent a subchannel number, and *y* may represent an index of a slot.

In a possible design, the candidate resource *R*_{*x*,*y*} may be at a granularity of one slot and *L_{subCH}* contiguous subchannels.

In another possible design, the candidate resource *R*_{*x*,*y*} may be at a granularity of a plurality of consecutive slots and each slot with L_{subCH} contiguous subchannels.

In still another possible design, the candidate resource *R_{x,y}* may be at a granularity of a plurality of consecutive slots, each slot with L_{RB set} contiguous RB sets (set), and each RB set with L_{subCH} contiguous subchannels.

In still another possible design, the candidate resource *R_{x,y}* may be at a granularity of one slot and L_{RB set} contiguous RB sets, and each RB set with L_{subCH} contiguous subchannels.

*L_{subCH}* and L_{RB set} may be provided by the higher layer. A specific implementation of the candidate resource *R_{x,y}* is not limited in this application.

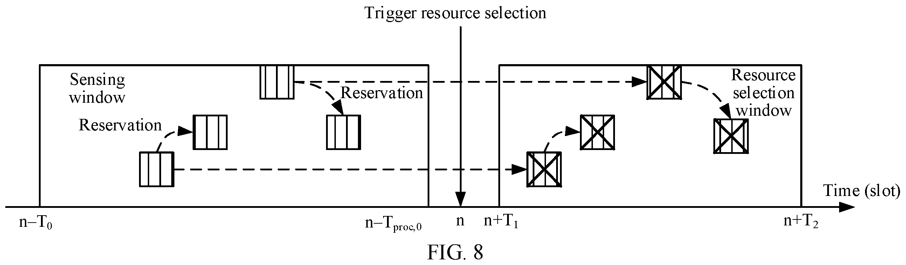

FIG. 8 is a diagram of a resource selection window and a sensing window according to an embodiment of this application. As shown in FIG. 8, the resource selection window *[n + T*₁, *n* + *T*₂] is a time window from a slot "*n* + *T*₁" to a slot "*n* + *T*₂"*. T*₁ satisfies $0 \leq {T}_{1} \leq {T}_{proc , 1}^{SL}$ (≤ represents less than or equal to), and ${T}_{proc , 1}^{SL}$ may be determined according to the following Table 2.

**Table 2**

| *µ_{SL}* | ${T}_{proc , 1}^{SL} \left[slots\right]$ |
|---|---|
| 0 | 3 |
| 1 | 5 |
| 2 | 9 |
| 3 | 17 |

Table 2 provides an example of some correspondences between a subcarrier spacing and ${T}_{proc , 1}^{SL}$*.* In Table 2, *µ_{SL}* represents a configured subcarrier spacing, and represents a value of ${T}_{proc , 1}^{SL}$ corresponding to the subcarrier spacing, where a unit of ${T}_{proc , 1}^{SL}$ is a slot (slot). As shown in Table 2, when *µ_{SL}* is 0, the subcarrier spacing is 15 kHz, and ${T}_{proc , 1}^{SL}$ is three slots; when *µ_{SL}* is 1, the subcarrier spacing is 30 kHz, and ${T}_{proc , 1}^{SL}$ is five slots; when *µ_{SL}* is 2, the subcarrier spacing is 60 kHz, and ${T}_{proc , 1}^{SL}$ is nine slots; or when *µ_{SL}* is 3, the subcarrier spacing is 120 kHz, and ${T}_{proc , 1}^{SL}$ is 17 slots.

Within a range from 0 to ${T}_{proc , 1}^{SL}$, selection of T₁ may be based on an implementation. For example, the first terminal device may select a value of T₁ based on a capability of the first terminal device. For example, if a processing capability is high, T1 may be small.

A value of T₂ is related to T₂ₘᵢₙ and a remaining packet delay budget (packet delay budget, PDB). T₂ₘᵢₙ may be configured by a higher layer, and different services may correspond to same or different T₂ₘᵢₙ. When T₂ₘᵢₙ is less than the remaining PDB, T₂ satisfies T₂ₘᵢₙ ≤ T₂ ≤ PDB. When T₂ₘᵢₙ is greater than or equal to the remaining PDB, T₂ is equal to the remaining PDB. Within a range from T₂ₘᵢₙ to the PDB, selection of T₂ may also be based on an implementation. For example, the value of T₂ may be determined based on a sending requirement.

S702: Determine a sensing window $\left[0-{T}_{0},n-{T}_{proc , 0}^{SL}\right)$.

The sensing window is also referred to as the listening window. Still refer to FIG. 8. The sensing window $\left[0-{T}_{0},n-{T}_{proc , 0}^{SL}\right)$ is a time window from a slot "n - T₀" to a slot " $n - {T}_{proc , 0}^{SL}$ ".

T₀ may be configured by using a higher-layer parameter, and ${T}_{proc , 0}^{SL}$ may be determined by using the following Table 3.

**Table 3**

| *µ_{SL}* | ${T}_{proc , 0}^{SL} \left[slots\right]$ |
|---|---|
| 0 | 1 |
| 1 | 1 |
| 2 | 2 |
| 3 | 4 |

Table 3 provides an example of some correspondences between a subcarrier spacing and ${T}_{proc , 0}^{SL}$*.* In Table 3, *µ_{SL}* represents a configured subcarrier spacing, and represents a value of ${T}_{proc , 0}^{SL}$ corresponding to the subcarrier spacing, where a unit of ${T}_{proc , 0}^{SL}$ is a slot (slot). As shown in Table 3, when *µ_{SL}* is 0, the subcarrier spacing is 15 kHz, and ${T}_{proc , 0}^{SL}$ is one slot; when *µ_{SL}* is 1, the subcarrier spacing is 30 kHz, and ${T}_{proc , 0}^{SL}$ is one slot; when *µ_{SL}* is 2, the subcarrier spacing is 60 kHz, and ${T}_{proc , 0}^{SL}$ is two slots; or when *µ_{SL}* is 3, the subcarrier spacing is 120 kHz, and ${T}_{proc , 0}^{SL}$ is four slots.

S703: Determine a threshold Th(pᵢ, pⱼ) of a reference signal received power (reference signal received power, RSRP).

The threshold *Th*(*pᵢ*, *pⱼ*) of the RSRP is related to a priority (referred to as *prio*_{TX}) of to-be-sent data (for example, the second sidelink information) and a priority (referred to as *prio*_{RX}) indicated by received sidelink control information (sidelink control information, SCI). For example, Th(pᵢ, pⱼ) may be a "*pᵢ*+(*pⱼ*-1)*8"^{th} threshold in an RSRP threshold set configured in a resource pool, where *pᵢ* is *prio*_{RX}, *pⱼ* is *prio*_{TX}, and * represents a product.

S704: Initialize an available resource set *S*_{A}, where *S*_{A} includes all time-frequency resources in the resource selection window.

*S*_{A} is the first candidate resource set described above.

S705: Exclude the following time-frequency resources from *S*_{A}: slots reserved for all periodic resources configured in a resource pool corresponding to a non-sensing slot (a sending slot) in the sensing window.

S706A: When the time-frequency resources excluded from *S*_{A} are less than X% of total resources (all the time-frequency resources) in the resource selection window, perform S706B and then perform S707; or when the time-frequency resources excluded from *S*_{A} are not less than X% of total resources in the resource selection window, perform S707.

A value of X% is configured by the resource pool and is related to *prio*_{TX}. For example, X% may be 20%. The value of X% is not limited in this application.

S706B: Re-initialize *S*_{A}, or initialize the available resource set *S*_{A} again, which is similar to S704.

S707: Continue to exclude the following time-frequency resources from *S*_{A}: a retransmission resource and a periodically reserved resource that are indicated by 1^{st}-stage SCI and that meet a preset condition.

The preset condition includes: The received 1^{st}-stage SCI is successfully decoded, a result of performing RSRP measurement on a physical sidelink shared channel (physical sidelink shared channel, PSSCH) demodulation reference signal (demodulation reference signal, DMRS) of a time-frequency resource reserved by using the received 1^{st}-stage SCI is greater than the threshold *Th*(*pᵢ*, *pⱼ*) of the RSRP, and the time-frequency resource reserved by using the received 1^{st}-stage SCI is in the resource selection window. It may be understood that the threshold *Th*(*pᵢ*, *pⱼ*) of the RSRP is determined in S703.

S708: Continue to exclude the following time-frequency resources from *S*_{A}: N slots adjacent to a first time-frequency resource in the time domain.

For example, it is assumed that a UE 1 reserves a slot 1 for sending data to a UE 2, and the UE 2 needs to receive the data in the slot 1. If the UE 2 needs to send data in a slot 2 (in this case, the UE 2 may be referred to as the first terminal device), the data may not be sent (or a part of the data is sent) because beam switching cannot be performed in a timely manner. For the UE 2, when selecting a resource, the UE 2 also needs to exclude the slot 2. A resource of the slot 1 may be referred to as the first time-frequency resource, and the slot 2 is a slot adjacent to the first time-frequency resource.

Optionally, the first time-frequency resource may also be excluded. For the first time-frequency resource, refer to the descriptions in the foregoing embodiment.

S709: When remaining time-frequency resources in *S*_{A} are less than X% of the total resources in the resource selection window, re-perform S704 after S710 is performed; or when remaining time-frequency resources in *S*_{A} are not less than X% of the total resources in the resource selection window, perform S711.

S710: Increase the threshold *Th*(*pᵢ*, *pⱼ*) of the RSRP until the remaining resources in *S*_{A} are not less than X% of the total resources in the resource selection window.

S711: Report remaining *S*_{A} to the higher layer.

After the time-frequency resources are excluded in the foregoing manner, the remaining *S*_{A} may be the second candidate resource set in the foregoing embodiment.

For example, the remaining *S*_{A} may be reported to the higher layer, for example, a medium access control (medium access control, MAC) layer or an RRC layer. The higher layer may select, from the remaining *S*_{A}, a second time-frequency resource used to send the second sidelink information.

In another possible design, the second candidate resource set may be determined by the higher layer (for example, the MAC layer) of the first terminal device. In other words, the first terminal device may exclude, at the higher layer, the N slots adjacent to the first time-frequency resource in the time domain, to obtain the second candidate resource set. When a value of N is related to a beam switching capability of the first terminal device, the N slots adjacent to the first time-frequency resource in the time domain may also be referred to as slots or time-frequency resources that are limited by the beam switching capability.

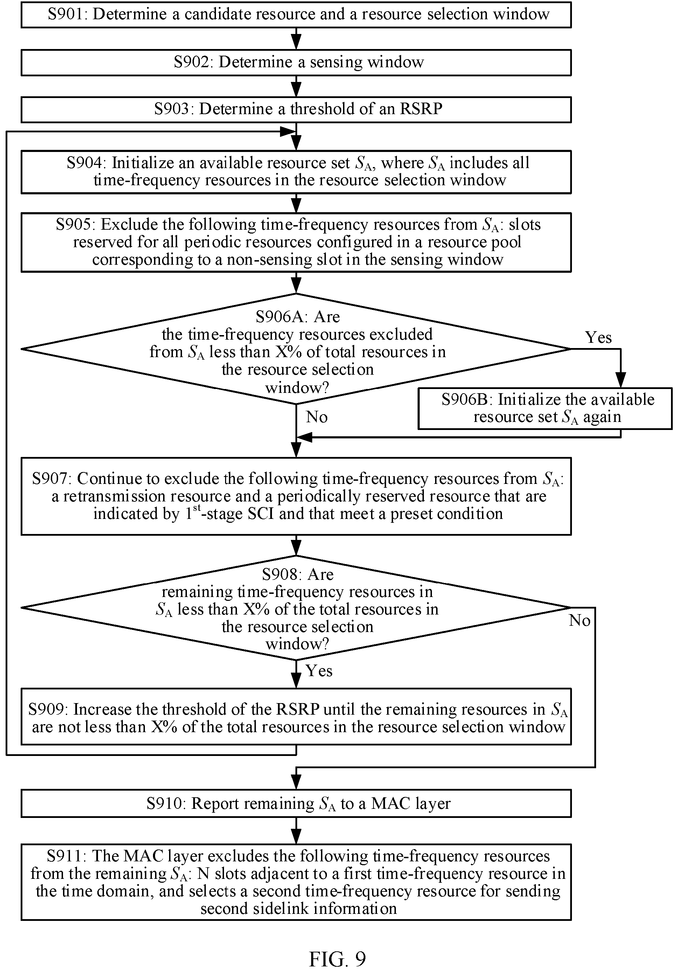

For example, similarly, a first terminal device (also referred to as a transmit-side UE or a T_{X} UE) triggers resource selection in a slot n. FIG. 9 is a diagram of another resource selection procedure according to an embodiment of this application. As shown in FIG. 9, the procedure in which the first terminal device performs resource selection may include S901 to S911.

S901: Determine a candidate resource *R*_{*x*,*y*} and a resource selection window [*n* + *T*₁, *n* + *T*₂].

S902: Determine a sensing window $\left[0-{T}_{0},n-{T}_{proc , 0}^{SL}\right)$.

S903: Determine a threshold Th(pᵢ, pⱼ) of an RSRP.

S904: Initialize an available resource set *S*_{A}, where *S*_{A} includes all time-frequency resources in the resource selection window.

*S*_{A} is the first candidate resource set described above.

S905: Exclude the following time-frequency resources from *S*_{A}: slots reserved for all periodic resources configured in a resource pool corresponding to a non-sensing slot (a sending slot) in the sensing window.

S906A: When the time-frequency resources excluded from *S*_{A} are less than X% of total resources (all the time-frequency resources) in the resource selection window, perform S906B and then perform S907; or when the time-frequency resources excluded from *S*_{A} are not less than X% of total resources in the resource selection window, perform S907.

S906B: Re-initialize *S*_{A}, or initialize the available resource set *S*_{A} again, which is similar to S904.

S907: Continue to exclude the following time-frequency resources from *S*_{A}: a retransmission resource and a periodically reserved resource that are indicated by 1^{st}-stage SCI and that meet a preset condition.

S908: When remaining time-frequency resources in *S*_{A} are less than X% of the total resources in the resource selection window, re-perform S904 after S909 is performed; or when remaining time-frequency resources in *S*_{A} are not less than X% of the total resources in the resource selection window, perform S910.

S909: Increase the threshold *Th*(*pᵢ*, *pⱼ*) of the RSRP until the remaining resources in *S*_{A} are not less than X% of the total resources in the resource selection window.

S910: Report remaining *S*_{A} to a MAC layer.

It may be understood that S901 to S910 may be implemented at a physical layer. For S901 to S910, refer to the descriptions in the embodiment shown in FIG. 7. Details are not described again. A difference lies in that S708 is omitted.

S911: The MAC layer excludes the following time-frequency resources from the remaining *S*_{A}: N slots adjacent to a first time-frequency resource in the time domain, and selects a second time-frequency resource for sending second sidelink information.

The MAC layer excludes the following time-frequency resources from the remaining *S*_{A}: the N slots adjacent to the first time-frequency resource in the time domain, and remaining *S*_{A} may be the second candidate resource set in the foregoing embodiment.

In other words, the MAC layer selects, based on the remaining *S*_{A}, the second time-frequency resource for sending the second sidelink information, and avoids the N slots adjacent to the first time-frequency resource in the time domain when selecting the second time-frequency resource. In other words, the second time-frequency resource is adjacent to a time-frequency resource in *S*_{B} by at least the N slots in the time domain, where *S*_{B} may include the first time-frequency resource, and *S*_{B} may be maintained and reported by the physical layer, or maintained by a higher layer.

Optionally, the second candidate resource set may alternatively be determined at another higher layer. This is not limited in this embodiment of this application.

In a possible design, the first time-frequency resource and the second time-frequency resource are separated by at least the N slots in the time domain, or when beams corresponding to the first sidelink information and the second sidelink information are different, the first time-frequency resource and the second time-frequency resource are separated by at least the N slots in the time domain.

For example, when the MAC layer performs resource selection in a plurality of transport blocks (transport block), namely, a plurality of pieces of sidelink information (where one piece of sidelink information may correspond to one TB), any two TBs may be non-adjacent, for example, separated by at least N slots. For example, the first time-frequency resource used to transmit the first sidelink information and the second time-frequency resource used to transmit the second sidelink information are separated by at least the N slots in the time domain.

Alternatively, when beams of two pieces of sidelink information are different, time-frequency resources of the two pieces of sidelink information may be separated by at least the N slots. For example, when beams corresponding to the first sidelink information and the second sidelink information are different, the first time-frequency resource used to transmit the first sidelink information and the second time-frequency resource used to transmit the second sidelink information are separated by at least the N slots in the time domain.

In this design, the first time-frequency resource and the second time-frequency resource are separated by at least the N slots in the time domain, or when the beams corresponding to the first sidelink information and the second sidelink information are different, the first time-frequency resource and the second time-frequency resource are separated by at least the N slots in the time domain, and more time may be reserved for beam switching, to reduce sidelink information transmission errors caused by untimely beam switching, namely, a beam switching delay.

Optionally, as described in the foregoing embodiment, in this design, N may be preconfigured or configured in the manner described in the foregoing embodiment, or predefined in the first terminal device, and/or a value of N may be determined based on a beam switching capability of the first terminal device.

When the value of N is related to the beam switching capability of the first terminal device, sufficient time can also be reserved for beam switching between the second time-frequency resource selected by the first terminal device and the first time-frequency resource, to meet a switch capability requirement of the UE, and further reduce a probability of the sidelink information transmission errors caused by the untimely beam switching, namely, the beam switching delay. In addition, the value of N may be further controlled to be within a proper range, to reduce a waste of time-frequency resources and improve resource utilization.

In a possible design, the communication method in the foregoing embodiment may further include: The first terminal device excludes a non-preferred time-frequency resource of a second terminal device from the first candidate resource set, where the non-preferred time-frequency resource of the second terminal device includes M slots adjacent to a third time-frequency resource in the time domain, M is a positive integer greater than 0, and the third time-frequency resource is used by the second terminal device to receive or send third sidelink information.

For the first candidate resource set, refer to the descriptions in the foregoing embodiment. Details are not described again.

The second terminal device may be the foregoing terminal device configured to receive the second sidelink information. A time-frequency resource related to the second terminal device may be referred to as the third time-frequency resource. That the third time-frequency resource is related to the second terminal device may include: The third time-frequency resource is used by the second terminal device to send the third sidelink information to another terminal device (including the first terminal device), or the third time-frequency resource is used by the second terminal device to receive the third sidelink information sent by another terminal device (including the first terminal device).

For example, the second terminal device is a UE 2. The UE 2 receives, on a time-frequency resource, sidelink information 3 sent by a UE 3, or when a UE 3 reserves sending of sidelink information 3 to a UE 2 on a time-frequency resource, the time-frequency resource used to send the sidelink information 3 is a third time-frequency resource related to the UE 2. The sidelink information 3 may be referred to as the third sidelink information.

In a possible design, the third time-frequency resource may include a time-frequency resource used by the second terminal device to send the third sidelink information to the another terminal device.

In another possible design, the third time-frequency resource may include a time-frequency resource used by the second terminal device to receive the third sidelink information sent by the another terminal device.

In still another possible design, the third time-frequency resource may include a time-frequency resource used by the second terminal device to send the third sidelink information to the another terminal device, and a time-frequency resource used by the second terminal device to receive the third sidelink information sent by the another terminal device.

The M slots adjacent to the third time-frequency resource in the time domain may be time-frequency resources of the M slots adjacent to the third time-frequency resource in the time domain. For example, M may be 1, 2, 3, or 4. A value of M is not limited in this embodiment.

For example, the third time-frequency resource is a time-frequency resource of a first slot. The M slots adjacent to the third time-frequency resource in the time domain may include M slots adjacent before the first slot and/or M slots adjacent after the first slot.

For example, when the first slot is a slot 3, and M is 1, the M slots adjacent to the first time-frequency resource in the time domain may include a slot 2 adjacent before the slot 3 and a slot 4 adjacent after the slot 3.

In this design, the M slots adjacent to the third time-frequency resource in the time domain may be defined as the non-preferred time-frequency resource of the second terminal device. The non-preferred time-frequency resource may be understood as a time-frequency resource on which the second terminal device does not expect to receive sidelink information from another terminal device, for example, the second sidelink information sent by the first terminal device. When selecting the time-frequency resource used to send the second sidelink information, the first terminal device excludes the non-preferred time-frequency resource of the second terminal device from the first candidate resource set, so that the selected second time-frequency resource and the third time-frequency resource may be non-adjacent or separated by at least the M slots, and more time is reserved for beam switching of the second terminal device, to reduce the sidelink information transmission errors caused by the untimely beam switching, namely, the beam switching delay.

In other words, in this design, the second terminal device that receives the second sidelink information may also consider a beam switching capability requirement, and the M slots adjacent to the third time-frequency resource in the time domain are defined as the non-preferred time-frequency resource, to reduce the sidelink information transmission errors caused by the untimely beam switching, namely, the beam switching delay.

Optionally, the non-preferred time-frequency resource of the second terminal device may also include the third time-frequency resource.

In a possible design, the method further includes: The first terminal device receives first indication information from the second terminal device, where the first indication information indicates the non-preferred time-frequency resource of the second terminal device.

For example, the second terminal device may send the first indication information to the first terminal device, and the first terminal device may determine the non-preferred time-frequency resource of the second terminal device based on the received first indication information.

In some possible implementations, the first indication information may be inter-UE coordination (inter-UE coordination, IUC) information, also referred to as inter-UE cooperation information.

For example, in a wireless communication system, when a plurality of UEs simultaneously use a same spectrum resource, an interference problem may occur. To improve system performance and user experience, interference needs to be reduced by coordinating behaviors between different UEs. This mechanism may be referred to as an IUC mechanism. In the IUC mechanism, a UE may notify another UE of a non-preference resource (non-preferred resource), and/or a preference resource (preferred resource), and/or whether a resource conflict exists. A scheme in which the UE notifies the another UE of the non-preference resource and/or the preference resource (preferred resource) of the UE may be referred to as an IUC scheme 1 (IUC scheme 1), and a scheme in which the UE notifies the another UE whether the resource conflict exists may be referred to as an IUC scheme 2 (IUC scheme 2).

In this implementation, the second terminal device may be a UE that sends the IUC information, and the first terminal device may be a UE that receives the IUC information. A manner in which the second terminal device sends the IUC information to the first terminal device may include active triggering or conditional triggering.

In the active triggering manner, the first terminal device may send IUC request signaling to request assistance of a surrounding UE. After receiving the IUC request signaling, the second terminal device may send the IUC information to the first terminal device, where the IUC information indicates the non-preferred time-frequency resource of the second terminal device. For details, refer to the foregoing descriptions.

In the condition triggering manner, when a condition is met, the second terminal device may actively determine IUC content, and send the IUC information to the first terminal device, where the IUC information indicates the non-preferred time-frequency resource of the second terminal device. For example, when finding that resource interference of receiving sidelink information is large, the second terminal device may send the IUC information to the first terminal device. A condition for triggering sending of the IUC information is not limited in this application.

For example, the second terminal device may determine the non-preferred time-frequency resource in one or more of the following manners.
(1) The second terminal device is a receiver of the second sidelink information sent by the first terminal device. Due to a half-duplex problem, the second terminal device does not expect to receive the second sidelink information on a time-frequency resource, and therefore determines that the time-frequency resource is the non-preferred time-frequency resource.
(2) A time-frequency resource in received SCI 1-A meets a condition 1 or a condition 2, and therefore it is determined that the time-frequency resource is the non-preferred time-frequency resource.

The condition 1 includes: An RSRP measured by the second terminal device for the SCI 1-A is greater than a threshold Th(prio_{Rx}), where prio_{Rx} is a priority indicated in the SCI 1-A.

The internal parameter Th(prio_{Rx}) may be set to a k^{th} value in sl-ThresholdRSRP-Condition1-B-1-Option1List, where k=prio_{Rx}.

The condition 2 includes: The second terminal device is a destination UE of a TB on the SCI 1-A, that is, a data receiver, and when the second terminal device receives the TB, an RSRP obtained through measurement is less than a threshold Th'(prio_{Rx}), where prio_{Rx} is a priority indicated in the SCI 1-A.

The internal parameter Th(prio_{Rx}) may be set to a k^{th} value in sl-ThresholdRSRP-Condition1-B-1-Option2List, where k=prio_{Rx}.

After determining the non-preferred time-frequency resource in the foregoing manner, the second terminal device may further define the M slots adjacent to the third time-frequency resource in the time domain as the non-preferred time-frequency resource. Optionally, the third time-frequency resource may be further defined as the non-preferred time-frequency resource.

In some other possible designs, the second terminal device may alternatively notify the first terminal device of the non-preferred time-frequency resource of the second terminal device by using another type of indication information or in another manner (for example, via a network device). This is not limited in this application.

In a possible design, M is preconfigured, configured, or predefined.

Similar to the N slots in the foregoing embodiment, in an implementation, a value of M may be preconfigured in hardware and/or software of the second terminal device, for example, recorded/written in advance, and may be changed by using software or hardware.

In another implementation, a value of M may be configured by the network device (for example, a base station) for the second terminal device by using a SIB message, RRC signaling, or a MIB message, for example, recorded/written into hardware and/or software of the second terminal device.

In still another implementation, a value of M may be configured by another device (for example, another terminal device) for the second terminal device by using PC5-RRC signaling.

In still another implementation, a value of M does not need to be configured by another device, and may be information predefined (which may be recorded/written in advance) in hardware and/or software of the second terminal device, or may be understood as information that cannot be changed by the network device or another terminal device. In other words, M may be predefined in the second terminal device in a standard or protocol manner.

An implementation of M is not limited in this application.

In a possible design, a value of M is related to a beam switching capability of the second terminal device, and the beam switching capability of the second terminal device indicates a quantity of times that the second terminal device is capable of performing beam switching in one slot.

For example, for the beam switching capability of the second terminal device, refer to Table 1 above. A quantity of times that the UE is capable of performing beam switching in one slot is limited. For different subcarrier spacings, the UE may support different beam switching capabilities.

In this embodiment, the value of M may be determined based on the beam switching capability of the second terminal device. When the second terminal device can complete beam switching in one slot, the value of M may be 1. When the second terminal device cannot complete beam switching in one slot, the value of M may be a quantity of slots required by the second terminal device to complete beam switching, and the second terminal device may exclude a time-frequency resource adjacent to the third time-frequency resource based on a slot granularity.

In this design, the value of M is determined based on the beam switching capability of the second terminal device, so that a beam switching capability requirement of the second terminal device can be considered for the non-preferred time-frequency resource of the second terminal device, and the second terminal device can provide a more realistic and effective non-preferred time-frequency resource for the first terminal device. Sufficient time can be reserved for beam switching (for example, the second terminal device performs beam switching) between the second time-frequency resource selected by the first terminal device and the third time-frequency resource, to meet the switch capability requirement of the UE, and further reduce the probability of the sidelink information transmission errors caused by the untimely beam switching, namely, the beam switching delay. In addition, the value of M may be further controlled to be within a proper range, to reduce a waste of time-frequency resources and improve resource utilization.

Optionally, when the value of M is related to the beam switching capability of the second terminal device, M may be preconfigured or configured in the manner described in the foregoing embodiment, or predefined in the second terminal device, or may be determined by the second terminal device based on the beam switching capability of the second terminal device. This is not limited herein.

In a possible design, the M slots adjacent to the third time-frequency resource in the time domain are used to perform beam switching before or after the third sidelink information is sent or received.

It may be understood that, the second terminal device may receive or send other sidelink information (for example, receive the second sidelink information) before or after sending or receiving the third sidelink information. The M slots adjacent to the third time-frequency resource in the time domain may include M slots before the slot in which the third time-frequency resource is located and M slots after the slot in which the third time-frequency resource is located.

After completing transmission of sidelink information (for example, the sidelink information 2) before the third sidelink information, the second terminal device may perform beam switching to receive or send the third sidelink information. Time for performing beam switching may be a last OFDM symbol in a slot of the sidelink information 2, and/or a part or all of OFDM symbols in the M slots before the slot in which the third time-frequency resource is located.

Alternatively, after completing transmission of the third sidelink information, the second terminal device may perform beam switching to send or receive sidelink information (for example, the sidelink information 2) after the third sidelink information. Time for performing beam switching may be a last OFDM symbol in a slot of the third sidelink information, and/or a part or all of OFDM symbols in the M slots after the slot in which the third time-frequency resource is located.

In other words, in this embodiment, the excluded M slots adjacent to the third time-frequency resource in the time domain may be used to perform beam switching before or after the third sidelink information is sent or received. However, beam switching may occupy a part or all of OFDM symbols in the M slots, or may not occupy an OFDM symbol in the M slots. Whether beam switching occupies the OFDM symbol in the M slots, or a quantity of OFDM symbols that are occupied in the M slots depends on whether M is related to the beam switching capability of the first terminal device. For details, refer to the descriptions in the foregoing embodiment.

Optionally, when a beam of the sidelink information before or after the third sidelink information is the same as a beam of the third sidelink information, the second terminal device may not perform beam switching.

In a possible design, that the first terminal device determines the second time-frequency resource based on the second candidate resource set may include: determining the second time-frequency resource based on the second candidate resource set and a preferred time-frequency resource of the second terminal device, or based on a preferred time-frequency resource of the second terminal device.

The preferred time-frequency resource of the second terminal device does not include M slots adjacent to a third time-frequency resource in the time domain, M is a positive integer greater than 0, and the third time-frequency resource is used by the second terminal device to receive or send third sidelink information.

For the second candidate resource set, the third time-frequency resource, the M slots (including a value or an implementation of M) adjacent to the third time-frequency resource in the time domain, and the like, refer to the descriptions in the foregoing embodiment. Details are not described herein again. The second terminal device may be the foregoing terminal device configured to receive the second sidelink information.

For example, after the second terminal device excludes the non-preferred time-frequency resource, a remaining time-frequency resource may be referred to as the preferred time-frequency resource.

Compared with the foregoing embodiment in which the first terminal device excludes the preferred time-frequency resource of the second terminal device from the first candidate resource set, in this design, the first terminal device may not exclude the preferred time-frequency resource of the second terminal device, but determines the second time-frequency resource based on the second candidate resource set and the preferred time-frequency resource of the second terminal device, or based on the preferred time-frequency resource of the second terminal device.

For example, the first terminal device may take an intersection of the second candidate resource set and the preferred time-frequency resource (or may be a set) of the second terminal device, and determine the second time-frequency resource from time-frequency resources included in both the second candidate resource set and the preferred time-frequency resource of the second terminal device, to send the second sidelink information.

Alternatively, the first terminal device may determine the second time-frequency resource based on the preferred time-frequency resource of the second terminal device. This is not limited herein.

In this design, when selecting the time-frequency resource used to send the second sidelink information, the first terminal device determines the second time-frequency resource based on the second candidate resource set and the preferred time-frequency resource of the second terminal device, or based on the preferred time-frequency resource of the second terminal device, so that the selected second time-frequency resource and the third time-frequency resource may be non-adjacent or separated by at least the M slots, and more time is reserved for beam switching of the second terminal device, to reduce the sidelink information transmission errors caused by the untimely beam switching, namely, the beam switching delay.

In other words, in this design, the second terminal device that receives the second sidelink information may also define the preferred resource by considering the beam switching capability requirement.

Optionally, the preferred time-frequency resource of the second terminal device does not include the third time-frequency resource.

In a possible design, the method may further include: The first terminal device receives second indication information from the second terminal device, where the second indication information indicates the preferred time-frequency resource of the second terminal device.

For example, the second terminal device may send the second indication information to the first terminal device, and the first terminal device may determine the preferred time-frequency resource of the second terminal device based on the received second indication information.

In some possible implementations, the second indication information may be IUC information. For both the IUC information and a manner of sending the IUC information, refer to the descriptions in the foregoing embodiment. Details are not described again. A difference lies in that, in this implementation, the IUC information may indicate the preferred time-frequency resource of the second terminal device.

In some other possible designs, the second terminal device may alternatively notify the first terminal device of the preferred time-frequency resource of the second terminal device by using another type of indication information or in another manner (for example, via a network device). This is not limited in this application.

In a possible design, the method may further include: The first terminal device receives third indication information from the second terminal device, where the third indication information indicates whether a beam switching conflict exists between the second time-frequency resource and the third time-frequency resource, and the third time-frequency resource is used by the second terminal device to receive or send third sidelink information. The first terminal device reselects the second time-frequency resource when the third indication information indicates that a beam switching conflict exists between the second time-frequency resource and the third time-frequency resource.

For the third time-frequency resource, refer to the descriptions in the foregoing embodiment. Details are not described again.

For example, based on any one of the foregoing embodiments, after determining the second time-frequency resource, the first terminal device may send SCI to the second terminal device, to notify the second terminal device to receive the second sidelink information on the second time-frequency resource. The second terminal device may determine whether a beam switching conflict exists between the second time-frequency resource and the third time-frequency resource that is related to the second terminal device. The beam switching conflict means that the second time-frequency resource is adjacent to the third time-frequency resource, and beams of the second time-frequency resource and the third time-frequency resource are different.

The second terminal device sends the third indication information to the first terminal device. When a beam switching conflict exists between the second time-frequency resource and the third time-frequency resource that is related to the second terminal device, the third indication information indicates that a beam switching conflict exists between the second time-frequency resource and the third time-frequency resource. When no beam switching conflict exists between the second time-frequency resource and the third time-frequency resource that is related to the second terminal device, the third indication information indicates that no beam switching conflict exists between the second time-frequency resource and the third time-frequency resource. The first terminal device may reselect the second time-frequency resource when the third indication information indicates that a beam switching conflict exists between the second time-frequency resource and the third time-frequency resource.

In this design, when a beam switching conflict exists between the second time-frequency resource and the third time-frequency resource, the first terminal device reselects the second time-frequency resource. This can also reduce the sidelink information transmission errors caused by the untimely beam switching, namely, the beam switching delay.

Optionally, in some other possible designs, the third indication information may alternatively directly indicate the first terminal device whether to reselect the second time-frequency resource. This is not limited in this application.

In some possible implementations, the third indication information may be IUC information. For both the IUC information and a manner of sending the IUC information, refer to the descriptions in the foregoing embodiment. Details are not described again. A difference lies in that, in this implementation, the IUC information may indicate whether a beam switching conflict exists between the second time-frequency resource and the third time-frequency resource.

Optionally, in this implementation, the IUC information may further indicate whether a resource conflict exists between the second time-frequency resource and the third time-frequency resource (where a beam switching conflict may also be defined as a resource conflict). For example, the resource conflict may include: The second time-frequency resource and the third time-frequency resource overlap, or a beam switching conflict exists between the second time-frequency resource and the third time-frequency resource.

In some other possible designs, the second terminal device may alternatively notify, by using another type of indication information or in another manner (for example, via the network device), the first terminal device whether a beam switching conflict exists and/or whether the second time-frequency resource needs to be reselected. This is not limited in this application.

In the foregoing embodiment, a solution of reducing the sidelink information transmission errors caused by the untimely beam switching, namely, the beam switching delay is described in this application from the following different perspectives sequentially: When the first terminal device performs resource exclusion, the N slots adjacent to the time-frequency resource in the time domain related to the first terminal device are excluded. The first terminal device enables time-frequency resources of different sidelink information to be separated by at least the N slots. When the second terminal device notifies the first terminal device of the non-preferred time-frequency resource or the preferred time-frequency resource, the non-preferred time-frequency resource includes the M slots adjacent to the time-frequency resource in the time domain related to the second terminal device, and the second terminal device notifies the first terminal device whether a beam switching conflict exists.

In some possible embodiments, the foregoing solution in which the first terminal device enables the time-frequency resources of the different sidelink information to be separated by at least the N slots may alternatively be implemented as an independent embodiment.

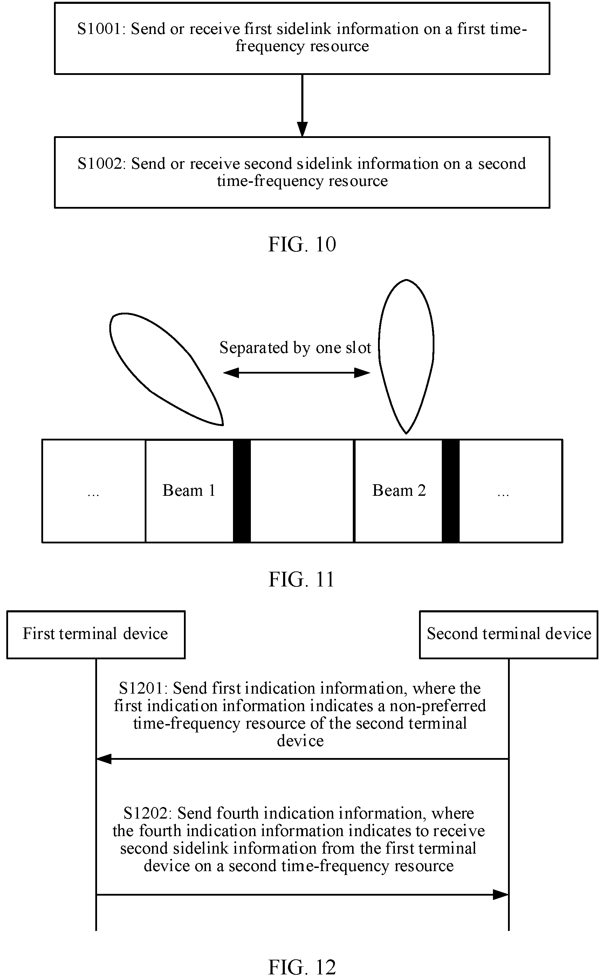

For example, an embodiment of this application further provides a communication method. The method may be applied to any UE, for example, a first terminal device. FIG. 10 is another schematic flowchart of a communication method according to an embodiment of this application. As shown in FIG. 10, the method may include S1001 and S1002.

S1001: Send or receive first sidelink information on a first time-frequency resource.

S1002: Send or receive second sidelink information on a second time-frequency resource.

The first time-frequency resource and the second time-frequency resource are separated by at least N slots in the time domain, or when beams corresponding to the first sidelink information and the second sidelink information are different, the first time-frequency resource and the second time-frequency resource are separated by at least N slots in the time domain, and N is a positive integer greater than 0.

Optionally, as described in the foregoing embodiment, the N slots may also be referred to as N time units, and the time unit may alternatively be at a granularity such as a symbol or a subframe, and is not limited to a slot.

For example, peer devices of the first sidelink information and the second sidelink information may be the same or may be different.

The first sidelink information may be transmitted before or after the second sidelink information, that is, S1001 may be performed before or after S1002. This is not limited in this application.

For example, the beams corresponding to the first sidelink information and the second sidelink information are different and N is 1. FIG. 11 is a diagram of transmission of different sidelink information according to an embodiment of this application. As shown in FIG. 11, it is assumed that the first sidelink information is transmitted on the first time-frequency resource through a beam 1, and the second sidelink information is transmitted on the second time-frequency resource through a beam 2. In this embodiment, the first time-frequency resource and the second time-frequency resource may be separated by one slot in the time domain. When switching from the beam 1 to the beam 2 is performed, more beam switching time may be reserved for a terminal device in one slot for separation.

Similar to an implementation of N in the foregoing embodiment, in this embodiment, N is preconfigured, configured, or predefined. A value of N may be related to a beam switching capability of the terminal device, and the beam switching capability of the terminal device indicates a quantity of times that the terminal device is capable of performing beam switching in one slot.

For beneficial effects of this embodiment, refer to the descriptions in the foregoing embodiment. For example, more time may be reserved for beam switching, to reduce sidelink information transmission errors caused by untimely beam switching, namely, a beam switching delay. When the value of N is related to the beam switching capability of the terminal device, sufficient time may be reserved for beam switching, to meet a switch capability requirement of a UE, and further reduce a probability of the sidelink information transmission errors caused by the untimely beam switching, namely, the beam switching delay. In addition, the value of N may be further controlled to be within a proper range, to reduce a waste of time-frequency resources and improve resource utilization.

In some possible embodiments, the foregoing solution in which when a second terminal device notifies a first terminal device of a non-preferred time-frequency resource or a preferred time-frequency resource, the second terminal device notifies the first terminal device whether a beam switching conflict exists, and the like may alternatively be implemented as an independent embodiment.

For example, an embodiment of this application further provides a communication method. FIG. 12 is still another schematic flowchart of a communication method according to an embodiment of this application. As shown in FIG. 12, the method may include S1201 and S1202.

S1201: A second terminal device sends first indication information to a first terminal device, where the first indication information indicates a non-preferred time-frequency resource of the second terminal device.

The non-preferred time-frequency resource of the second terminal device includes M slots adjacent to a third time-frequency resource in the time domain, M is a positive integer greater than 0, and the third time-frequency resource is used by the second terminal device to receive or send third sidelink information.

Optionally, as described in the foregoing embodiment, the M slots may also be referred to as M time units, and the time unit may alternatively be at a granularity such as a symbol or a subframe, and is not limited to a slot.

Optionally, the non-preferred time-frequency resource of the second terminal device includes the third time-frequency resource.

Correspondingly, the first terminal device receives the first indication information from the second terminal device.

S1202: The first terminal device sends fourth indication information to the second terminal device, where the fourth indication information indicates to receive second sidelink information from the first terminal device on a second time-frequency resource.

The non-preferred time-frequency resource of the second terminal device does not include the second time-frequency resource.

Correspondingly, the second terminal device receives the fourth indication information from the first terminal device.

Optionally, the first terminal device may send the second sidelink information to the second terminal device on the second time-frequency resource.

Similar to an implementation of M in the foregoing embodiment, in this embodiment, M is preconfigured, configured, or predefined. A value of M may be related to a beam switching capability of the second terminal device. The beam switching capability of the second terminal device indicates a quantity of times that the second terminal device is capable of performing beam switching in one slot.

For beneficial effects of this embodiment, refer to the descriptions in the foregoing embodiment in which the second terminal device notifies the first terminal device of the non-preferred time-frequency resource. For example, more time may be reserved for beam switching, to reduce sidelink information transmission errors caused by untimely beam switching, namely, a beam switching delay. When the value of M is related to the beam switching capability of the second terminal device, a beam switching capability requirement of the second terminal device may be considered for the non-preferred time-frequency resource of the second terminal device, and the second terminal device may provide a more realistic and effective non-preferred time-frequency resource for the first terminal device, so that sufficient time is reserved for beam switching, to meet a switch capability requirement of a UE, and further reduce a probability of the sidelink information transmission errors caused by the untimely beam switching, namely, the beam switching delay. In addition, the value of M may be further controlled to be within a proper range, to reduce a waste of time-frequency resources and improve resource utilization.

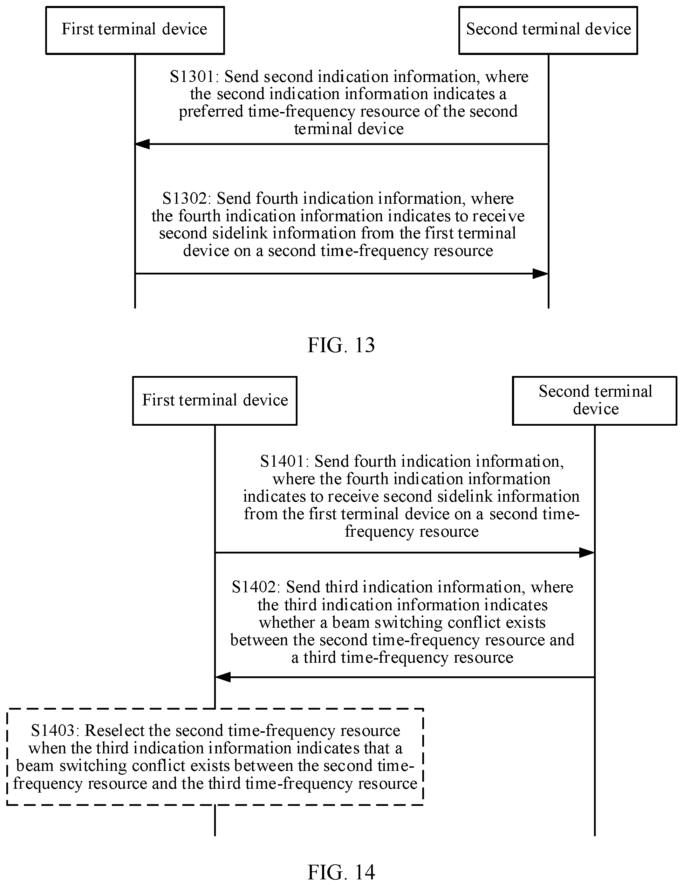

For another example, an embodiment of this application further provides a communication method. FIG. 13 is still another schematic flowchart of a communication method according to an embodiment of this application. As shown in FIG. 13, the method may include S1301 and S1302.

S1301: A second terminal device sends second indication information to a first terminal device, where the second indication information indicates a preferred time-frequency resource of the second terminal device.

The preferred time-frequency resource of the second terminal device does not include M slots adjacent to a third time-frequency resource in the time domain, M is a positive integer greater than 0, and the third time-frequency resource is used by the second terminal device to receive or send third sidelink information.

Optionally, as described in the foregoing embodiment, the M slots may also be referred to as M time units, and the time unit may alternatively be at a granularity such as a symbol or a subframe, and is not limited to a slot.

Optionally, the preferred time-frequency resource of the second terminal device does not include the third time-frequency resource.

Correspondingly, the first terminal device receives the second indication information from the second terminal device.

S1302: The first terminal device sends fourth indication information to the second terminal device, where the fourth indication information indicates to receive second sidelink information from the first terminal device on a second time-frequency resource.

The preferred time-frequency resource of the second terminal device may include the second time-frequency resource.

Correspondingly, the second terminal device receives the fourth indication information from the first terminal device.

Optionally, the first terminal device may send the second sidelink information to the second terminal device on the second time-frequency resource.

Similar to an implementation of M in the foregoing embodiment, in this embodiment, M is preconfigured, configured, or predefined. A value of M may be related to a beam switching capability of the second terminal device. The beam switching capability of the second terminal device indicates a quantity of times that the second terminal device is capable of performing beam switching in one slot.

For beneficial effects of this embodiment, refer to the descriptions in the foregoing embodiment in which the second terminal device notifies the first terminal device of the preferred time-frequency resource. For example, more time may be reserved for beam switching, to reduce sidelink information transmission errors caused by untimely beam switching, namely, a beam switching delay. When the value of M is related to the beam switching capability of the second terminal device, a beam switching capability requirement of the second terminal device may be considered for the preferred time-frequency resource of the second terminal device, and the second terminal device may provide a more realistic and effective preferred time-frequency resource for the first terminal device, so that sufficient time is reserved for beam switching, to meet a switch capability requirement of a UE, and further reduce a probability of the sidelink information transmission errors caused by the untimely beam switching, namely, the beam switching delay. In addition, the value of M may be further controlled to be within a proper range, to reduce a waste of time-frequency resources and improve resource utilization.

For another example, an embodiment of this application further provides a communication method. FIG. 14 is still another schematic flowchart of a communication method according to an embodiment of this application. As shown in FIG. 14, the method may include S1401 to S1403.

S1401: A first terminal device sends fourth indication information to a second terminal device, where the fourth indication information indicates to receive second sidelink information from the first terminal device on a second time-frequency resource.

A preferred time-frequency resource of the second terminal device may include the second time-frequency resource.

Correspondingly, the second terminal device receives the fourth indication information from the first terminal device.

S1402: The second terminal device sends third indication information to the first terminal device, where the third indication information indicates whether a beam switching conflict exists between the second time-frequency resource and a third time-frequency resource.

The third time-frequency resource is used by the second terminal device to receive or send third sidelink information.

Correspondingly, the first terminal device receives the third indication information from the second terminal device.

S1403: The first terminal device reselects the second time-frequency resource when the third indication information indicates that a beam switching conflict exists between the second time-frequency resource and the third time-frequency resource.

Optionally, when the third indication information indicates that no beam switching conflict exists between the second time-frequency resource and the third time-frequency resource, the first terminal device may send the second sidelink information to the second terminal device on the second time-frequency resource.

In this embodiment, when a beam switching conflict exists between the second time-frequency resource and the third time-frequency resource, the first terminal device reselects the second time-frequency resource. This can also reduce sidelink information transmission errors caused by untimely beam switching, namely, a beam switching delay. For details, refer to the descriptions in the foregoing embodiments. Details are not described again.

In some possible designs, in this embodiment of this application, improvement may be further performed in terms of an OFDM symbol, to reduce the sidelink information transmission errors caused by the untimely beam switching, namely, the beam switching delay.

For example, an embodiment of this application further provides a communication method, and the communication method may be applied to any terminal device, for example, a first terminal device. The method includes: sending or receiving first sidelink information in a first slot; and sending or receiving second sidelink information in a second slot, where
the first slot is before the second slot; and when the first slot is adjacent to the second slot, beams corresponding to the first sidelink information and the second sidelink information are different, and a priority of the first sidelink information is lower than a priority of the second sidelink information, or when the first slot is adjacent to the second slot, and beams corresponding to the first sidelink information and the second sidelink information are different, the first sidelink information is carried on a preset quantity of symbols in the first slot, or there are a preset quantity of GAP symbols in the first slot, and a preset quantity is preconfigured, configured, or predefined.

For example, a priority of sidelink information may be determined by a higher layer, for example, an application layer. For example, the priority of the sidelink information may be related to a service. This is not limited herein.

It should be understood that an OFDM symbol in this embodiment of this application may be referred to as a symbol briefly.

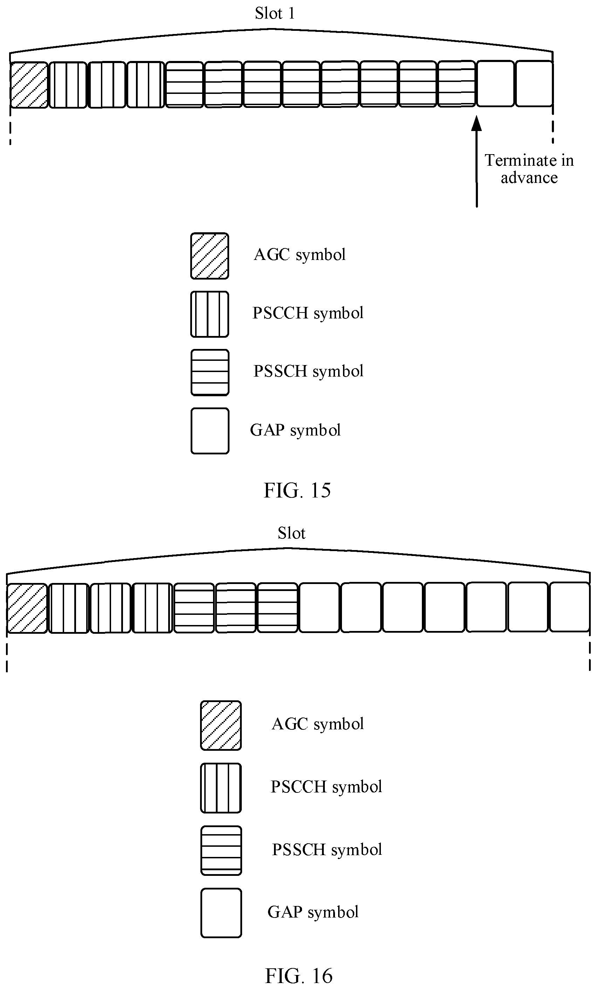

For example, the first slot is a slot 1, the second slot is a slot 2, a channel on which the first sidelink information is located is a physical sidelink shared channel (physical sidelink shared channel, PSSCH), and the PSSCH channel is carried on eight symbols in the slot 1. FIG. 15 is a diagram of a symbol for carrying sidelink information according to an embodiment of this application. As shown in FIG. 15, in the slot 1, a 1^{st} symbol may be an automatic gain control (automatic gain control, AGC) symbol, and is used to carry AGC information. A 2^{nd} symbol to a 4^{th} symbol may be physical sidelink control channel (physical sidelink control channel, PSCCH) symbols, and are used to carry SL control information. A 5^{th} symbol to a 12^{th} symbol may be PSSCH symbols, and are used to carry the first sidelink information. When the 12^{th} symbol ends, transmission of the first sidelink information ends or terminates in advance. A 13^{th} symbol and a 14^{th} symbol may be GAP (GAP) symbols, and are used to perform beam switching.

In this example, it may be defined that the first sidelink information is carried on eight symbols in the first slot (the slot 1), and a preset quantity is 8. Alternatively, it may be defined that there are two GAP symbols in the first slot, and a preset quantity is 2.

In other words, in this embodiment, the preset quantity may be used to define a quantity of symbols for carrying the first sidelink information, or may be used to define a quantity of GAP symbols.

Optionally, the preset quantity may be preconfigured, configured, or predefined. For details about meanings of preconfiguration, configuration, and predefinition, refer to the descriptions in the foregoing embodiments. Details are not described again.

For example, a value of the preset quantity may be related to a beam switching capability of the terminal device.

For example, when the preset quantity is used to define the quantity of symbols for carrying the first sidelink information, a quantity of symbols that need to be occupied by the terminal device to complete beam switching may be determined based on a quantity of times that the terminal device is capable of performing beam switching in one slot. For example, when K (where K is a positive integer greater than 0) symbols are needed, transmission of the first sidelink information may end at least K-1 (or more) symbols in advance (where a last symbol is usually a GAP symbol). A quantity of other symbols used to transmit the first sidelink information is the preset quantity.

For another example, when the preset quantity is used to define the quantity of GAP symbols, a quantity of symbols that need to be occupied by the terminal device to complete beam switching may be determined based on a quantity of times that the terminal device is capable of performing beam switching in one slot. For example, when K (where K is a positive integer greater than 0) symbols are needed, it may be determined that the preset quantity is at least K (or may be greater than K), so that transmission of the first sidelink information ends at least K-1 symbols in advance.

In a possible design, at least one symbol in the GAP symbols is used to perform beam switching.

For example, there may be at least one GAP symbol, and the terminal device may occupy one or more GAP symbols when performing beam switching.

In this embodiment, the first sidelink information is carried on the preset quantity of symbols in the first slot, or there are the preset quantity of GAP symbols in the first slot. By controlling a value of the preset quantity, more time (symbols) can be reserved for beam switching, to reduce sidelink information transmission errors caused by untimely beam switching, namely, a beam switching delay.

In a possible design, the method further includes: sending indication information to a peer device of the first sidelink information, or receiving indication information from a peer device of the first sidelink information, where the indication information indicates that the first sidelink information is carried on the preset quantity of symbols in the first slot, or there are the preset quantity of GAP symbols in the first slot.

Optionally, the indication information may be carried in 1^{st}-stage SCI or 2^{nd}-stage SCI.

For example, a UE 1 sends first sidelink information to a UE 2, and sends second sidelink information to another UE (including the UE 2) or receives second sidelink information from another UE. The UE 1 may further send indication information to the UE 2, to indicate that the first sidelink information is carried on a preset quantity of symbols in a first slot, or there are a preset quantity of GAP symbols in a first slot.

For another example, a UE 1 receives first sidelink information from a UE 2, and sends second sidelink information to another UE (including the UE 2) or receives second sidelink information from another UE. The UE 1 may further receive indication information from the UE 2, to indicate that the first sidelink information is carried on a preset quantity of symbols in a first slot, or there are a preset quantity of GAP symbols in a first slot.

Optionally, the indication information may be a 1-bit (bit) field or a multi-bit field, and a size of the indication information is not limited herein.

In some implementations, when exchanging UE capability information with a peer UE, the UE may alternatively obtain content indicated by the indication information.

In a possible design, channels on which the first sidelink information and the second sidelink information are located are physical sidelink feedback channels; or channels on which the first sidelink information and the second sidelink information are located are physical sidelink shared channels; or a channel on which the first sidelink information is located is a physical sidelink feedback channel, and a channel on which the second sidelink information is located is a physical sidelink shared channel; or a channel on which the first sidelink information is located is a physical sidelink shared channel, and a channel on which the second sidelink information is located is a physical sidelink feedback channel.

The channels on which the first sidelink information and the second sidelink information are located are not limited in this application.

Optionally, the foregoing embodiment is described by using an example in which the first sidelink information is sent or received in the first slot, and the second sidelink information is sent or received in the second slot. In some other possible scenarios, the terminal device may alternatively send or receive the first sidelink information, and send or receive the second sidelink information in a same slot. In this scenario, there are at least a preset quantity of GAP symbols between a symbol used to carry the first sidelink information and a symbol used to carry the second sidelink information, or the first sidelink information is carried on a preset quantity of symbols. For details, refer to the foregoing embodiment. Details are not described again.

In some other embodiments, at least two GAP symbols may alternatively be reserved in each slot for beam switching, to reduce sidelink information transmission errors caused by untimely beam switching, namely, a beam switching delay.

For example, an embodiment of this application further provides a communication method. The method includes: sending sidelink information to a second terminal device in a first slot, or receiving sidelink information from a second terminal device, where the first slot includes at least two consecutive GAP symbols.

For example, FIG. 16 is a diagram of a structure of a symbol according to an embodiment of this application. As shown in FIG. 16, one slot may include seven GAP symbols. When performing beam switching, a terminal device may occupy one or more of the seven GAP symbols, and a specific occupation quantity is related to a beam switching capability of the terminal device.

In this embodiment, it is defined that the slot includes at least two consecutive GAP symbols, and more time (symbols) can be reserved for beam switching, to reduce sidelink information transmission errors caused by untimely beam switching, namely, a beam switching delay.

The foregoing mainly describes the solutions provided in embodiments of this application from a perspective of interaction between network elements. It may be understood that, to implement the foregoing functions, each network element such as the first terminal device or the second terminal device includes a corresponding hardware structure and/or software module for performing each function. The slot described in the following embodiments may also be replaced with a time unit such as a symbol or a subframe. A granularity of the time unit is not limited in this application.

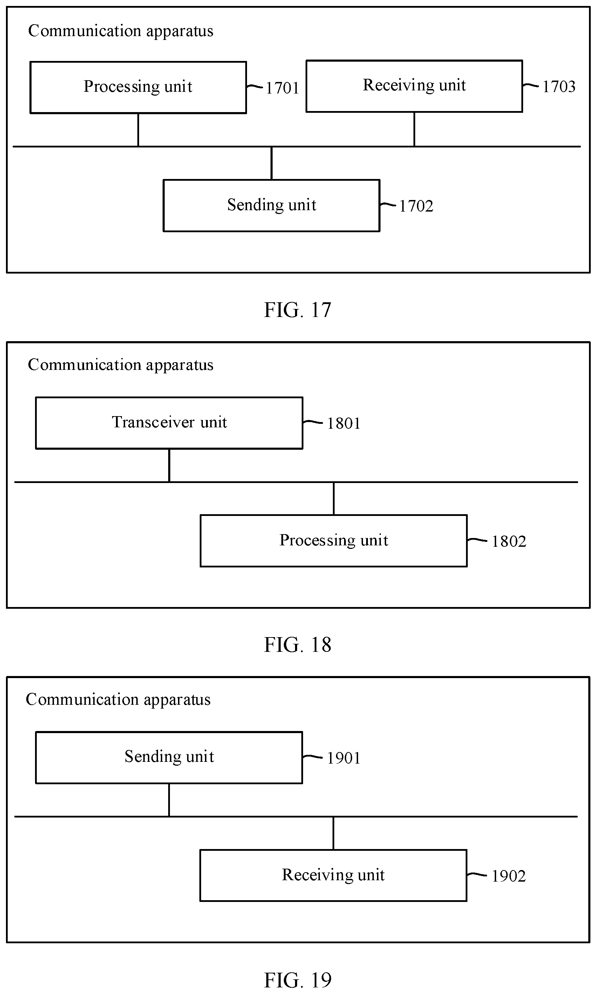

For example, an embodiment of this application may further provide a communication apparatus that may be used for the foregoing first terminal device. FIG. 17 is a diagram of a structure of a communication apparatus according to an embodiment of this application.

As shown in FIG. 17, the communication apparatus may include a processing unit 1701 and a sending unit 1702.

The processing unit 1701 is configured to exclude, from a first candidate resource set, N slots adjacent to a first time-frequency resource in the time domain, to obtain a second candidate resource set, where N is a positive integer greater than 0, and the first time-frequency resource is used to receive or send first sidelink information. The processing unit 1701 is further configured to determine a second time-frequency resource based on the second candidate resource set.

The sending unit 1702 is configured to send second sidelink information to a second terminal device on the second time-frequency resource.

Optionally, the processing unit 1701 is further configured to exclude the first time-frequency resource from the first candidate resource set.

In a possible design, N is preconfigured, configured, or predefined.

In a possible design, a value of N is related to a beam switching capability of a first terminal device, and the beam switching capability of the first terminal device indicates a quantity of times that the first terminal device is capable of performing beam switching in one slot.

In a possible design, the N slots adjacent to the first time-frequency resource in the time domain are used to perform beam switching before or after the first sidelink information is sent or received.

In a possible design, the second candidate resource set is determined by a physical layer or a medium access control layer.

In a possible design, the first time-frequency resource and the second time-frequency resource are separated by at least the N slots in the time domain, or when beams corresponding to the first sidelink information and the second sidelink information are different, the first time-frequency resource and the second time-frequency resource are separated by at least the N slots in the time domain.

In a possible design, the processing unit 1701 is further configured to exclude a non-preferred time-frequency resource of the second terminal device from the first candidate resource set, where the non-preferred time-frequency resource of the second terminal device includes M slots adjacent to a third time-frequency resource in the time domain, M is a positive integer greater than 0, and the third time-frequency resource is used by the second terminal device to receive or send third sidelink information.

Optionally, the non-preferred time-frequency resource of the second terminal device includes the third time-frequency resource.

In a possible design, the apparatus further includes a receiving unit 1703, configured to receive first indication information from the second terminal device, where the first indication information indicates the non-preferred time-frequency resource of the second terminal device.

In a possible design, the processing unit 1701 is specifically configured to determine the second time-frequency resource based on the second candidate resource set and a preferred time-frequency resource of the second terminal device, or based on a preferred time-frequency resource of the second terminal device, where the preferred time-frequency resource of the second terminal device does not include M slots adjacent to a third time-frequency resource in the time domain, M is a positive integer greater than 0, and the third time-frequency resource is used by the second terminal device to receive or send third sidelink information.

Optionally, the preferred time-frequency resource of the second terminal device does not include the third time-frequency resource.

In a possible design, the receiving unit 1703 is configured to receive second indication information from the second terminal device, where the second indication information indicates the preferred time-frequency resource of the second terminal device.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M slots adjacent to the third time-frequency resource in the time domain are used to perform beam switching before or after the third sidelink information is sent or received.

In a possible design, the receiving unit 1703 is configured to receive third indication information from the second terminal device, where the third indication information indicates whether a beam switching conflict exists between the second time-frequency resource and the third time-frequency resource, and the third time-frequency resource is used by the second terminal device to receive or send the third sidelink information.

The processing unit 1701 is further configured to reselect the second time-frequency resource when the third indication information indicates that a beam switching conflict exists between the second time-frequency resource and the third time-frequency resource.

For another example, an embodiment of this application may further provide a communication apparatus that may be used for any terminal device. FIG. 18 is another diagram of a structure of a communication apparatus according to an embodiment of this application.

As shown in FIG. 18, the communication apparatus may include a transceiver unit 1801 and a processing unit 1802.

The transceiver unit 1801 is configured to send or receive first sidelink information on a first time-frequency resource; and send or receive second sidelink information on a second time-frequency resource, where the first time-frequency resource and the second time-frequency resource are separated by at least N slots in the time domain, or when beams corresponding to the first sidelink information and the second sidelink information are different, the first time-frequency resource and the second time-frequency resource are separated by at least N slots in the time domain, and N is a positive integer greater than 0.

Optionally, the processing unit 1802 may be configured to select the first time-frequency resource for the first sidelink information, and select the second time-frequency resource for the second sidelink information.

In a possible design, N is preconfigured, configured, or predefined.

In a possible design, a value of N is related to a beam switching capability of a first terminal device, and the beam switching capability of the first terminal device indicates a quantity of times that the first terminal device is capable of performing beam switching in one slot.

In a possible design, the N slots are used to perform beam switching.

For another example, an embodiment of this application may further provide a communication apparatus that may be used for the foregoing second terminal device. FIG. 19 is still another diagram of a structure of a communication apparatus according to an embodiment of this application.

As shown in FIG. 19, the communication apparatus may include a sending unit 1901 and a receiving unit 1902.

The sending unit 1901 is configured to send first indication information to a first terminal device, where the first indication information indicates a non-preferred time-frequency resource of a second terminal device, the non-preferred time-frequency resource of the second terminal device includes M slots adjacent to a third time-frequency resource in the time domain, M is a positive integer greater than 0, and the third time-frequency resource is used by the second terminal device to receive or send third sidelink information.

The receiving unit 1902 is configured to receive fourth indication information from the first terminal device, where the fourth indication information indicates to receive second sidelink information from the first terminal device on a second time-frequency resource, and the non-preferred time-frequency resource of the second terminal device does not include the second time-frequency resource.

Optionally, the non-preferred time-frequency resource of the second terminal device includes the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M slots adjacent to the third time-frequency resource in the time domain are used to perform beam switching before or after the third sidelink information is sent or received.

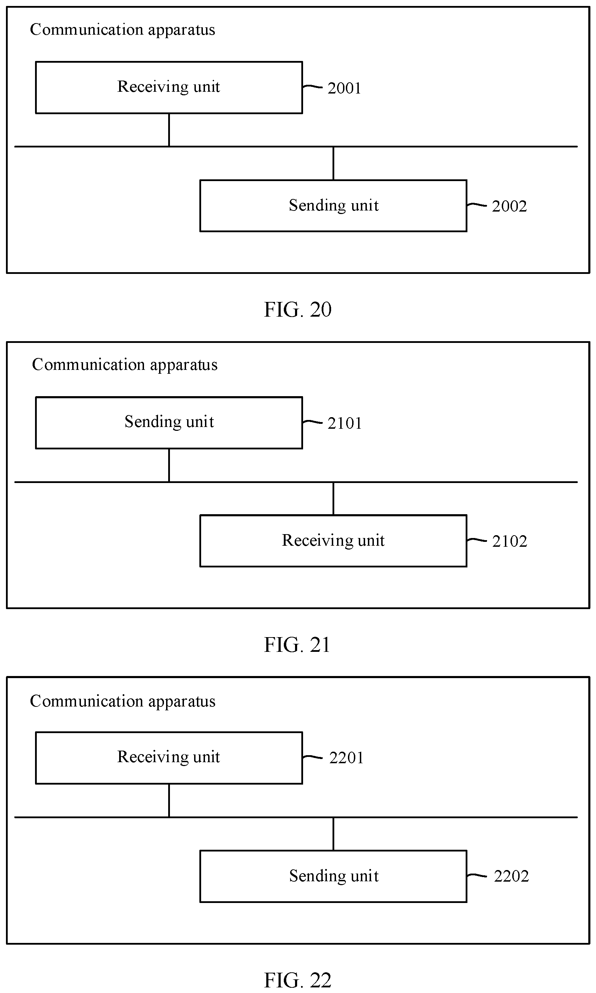

Corresponding to the communication apparatus shown in FIG. 19, an embodiment of this application may further provide a communication apparatus that may be used for the foregoing first terminal device. FIG. 20 is still another diagram of a structure of a communication apparatus according to an embodiment of this application.

As shown in FIG. 20, the communication apparatus may include a receiving unit 2001 and a sending unit 2002.

The receiving unit 2001 is configured to receive first indication information from a second terminal device, where the first indication information indicates a non-preferred time-frequency resource of the second terminal device, the non-preferred time-frequency resource of the second terminal device includes M slots adjacent to a third time-frequency resource in the time domain, M is a positive integer greater than 0, and the third time-frequency resource is used by the second terminal device to receive or send third sidelink information.

The sending unit 2002 is configured to send fourth indication information to the second terminal device, where the fourth indication information indicates to receive second sidelink information from a first terminal device on a second time-frequency resource, and the non-preferred time-frequency resource of the second terminal device does not include the second time-frequency resource.

Optionally, the non-preferred time-frequency resource of the second terminal device includes the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M slots adjacent to the third time-frequency resource in the time domain are used to perform beam switching before or after the third sidelink information is sent or received.

An embodiment of this application may further provide a communication apparatus that may be used for the foregoing second terminal device. FIG. 21 is still another diagram of a structure of a communication apparatus according to an embodiment of this application.

As shown in FIG. 21, the communication apparatus may include a sending unit 2101 and a receiving unit 2102.

The sending unit 2101 is configured to send second indication information to a first terminal device, where the second indication information indicates a preferred time-frequency resource of a second terminal device, the preferred time-frequency resource of the second terminal device does not include M slots adjacent to a third time-frequency resource in the time domain, M is a positive integer greater than 0, and the third time-frequency resource is used by the second terminal device to receive or send third sidelink information.

The receiving unit 2102 is configured to receive fourth indication information from the first terminal device, where the fourth indication information indicates to receive second sidelink information from the first terminal device on a second time-frequency resource, and the preferred time-frequency resource of the second terminal device includes the second time-frequency resource.

Optionally, the preferred time-frequency resource of the second terminal device does not include the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M slots adjacent to the third time-frequency resource in the time domain are used to perform beam switching before or after the third sidelink information is sent or received.

Corresponding to the communication apparatus shown in FIG. 21, an embodiment of this application may further provide a communication apparatus that may be used for the foregoing first terminal device. FIG. 22 is still another diagram of a structure of a communication apparatus according to an embodiment of this application.

As shown in FIG. 22, the communication apparatus may include a receiving unit 2201 and a sending unit 2202.

The receiving unit 2201 is configured to receive second indication information from a second terminal device, where the second indication information indicates a preferred time-frequency resource of the second terminal device, the preferred time-frequency resource of the second terminal device does not include M slots adjacent to a third time-frequency resource in the time domain, M is a positive integer greater than 0, and the third time-frequency resource is used by the second terminal device to receive or send third sidelink information.

The sending unit 2202 is configured to send fourth indication information to the second terminal device, where the fourth indication information indicates to receive second sidelink information from a first terminal device on a second time-frequency resource, and the preferred time-frequency resource of the second terminal device includes the second time-frequency resource.

Optionally, the preferred time-frequency resource of the second terminal device does not include the third time-frequency resource.

In a possible design, M is preconfigured, configured, or predefined.

In a possible design, a value of M is related to a beam switching capability of the second terminal device, and the beam switching capability of the second terminal device indicates a quantity of times that the second terminal device is capable of performing beam switching in one slot.

In a possible design, the M slots adjacent to the third time-frequency resource in the time domain are used to perform beam switching before or after the third sidelink information is sent or received.

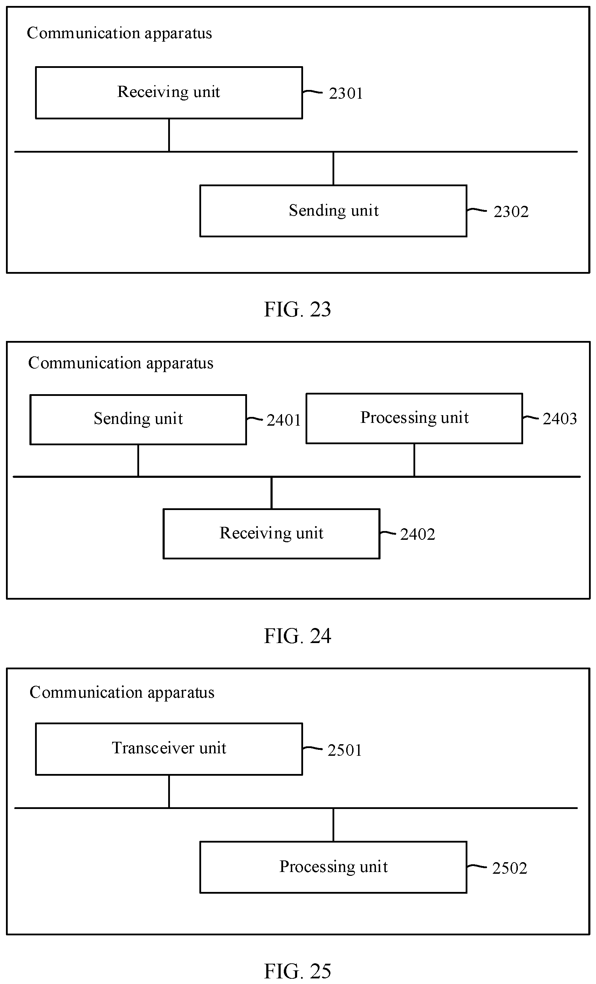

An embodiment of this application may further provide a communication apparatus that may be used for the foregoing second terminal device. FIG. 23 is still another diagram of a structure of a communication apparatus according to an embodiment of this application.

As shown in FIG. 23, the communication apparatus may include a receiving unit 2301 and a sending unit 2302.

The receiving unit 2301 is configured to receive fourth indication information from a first terminal device, where the fourth indication information indicates to receive second sidelink information from the first terminal device on a second time-frequency resource.

The sending unit 2302 is configured to send third indication information to the first terminal device, where the third indication information indicates whether a beam switching conflict exists between the second time-frequency resource and a third time-frequency resource, and the third time-frequency resource is used by a second terminal device to receive or send third sidelink information.

Corresponding to the communication apparatus shown in FIG. 23, an embodiment of this application may further provide a communication apparatus that may be used for the foregoing first terminal device. FIG. 24 is still another diagram of a structure of a communication apparatus according to an embodiment of this application.

As shown in FIG. 24, the communication apparatus may include a sending unit 2401, a receiving unit 2402, and a processing unit 2403.

The sending unit 24301 is configured to send fourth indication information to a second terminal device, where the fourth indication information indicates to receive second sidelink information from a first terminal device on a second time-frequency resource.

The receiving unit 2402 is configured to receive third indication information from the second terminal device, where the third indication information indicates whether a beam switching conflict exists between the second time-frequency resource and a third time-frequency resource, and the third time-frequency resource is used by the second terminal device to receive or send third sidelink information.

The processing unit 2403 is configured to reselect the second time-frequency resource when the third indication information indicates that a beam switching conflict exists between the second time-frequency resource and the third time-frequency resource.

An embodiment of this application may further provide a communication apparatus that may be used for any terminal device. FIG. 25 is still another diagram of a structure of a communication apparatus according to an embodiment of this application.

As shown in FIG. 25, the communication apparatus may include a transceiver unit 2501 and a processing unit 2502.

The transceiver unit 2501 is configured to send or receive first sidelink information in a first slot, and send or receive second sidelink information in a second slot, where
the first slot is before the second slot; and when the first slot is adjacent to the second slot, beams corresponding to the first sidelink information and the second sidelink information are different, and a priority of the first sidelink information is lower than a priority of the second sidelink information, or when the first slot is adjacent to the second slot, and beams corresponding to the first sidelink information and the second sidelink information are different, the first sidelink information is carried on a preset quantity of symbols in the first slot, or there are a preset quantity of GAP symbols in the first slot, and a preset quantity is preconfigured, configured, or predefined.

Optionally, the processing unit 2502 is configured to determine the priority of the first sidelink information and the priority of the second sidelink information, and configured to determine a quantity of symbols for carrying the first sidelink information in the first slot.

In a possible design, at least one symbol in the GAP symbols is used to perform beam switching.

In a possible design, the transceiver unit 2501 is further configured to send indication information to a peer device of the first sidelink information, or receive indication information from a peer device of the first sidelink information, where the indication information indicates that the first sidelink information is carried on the preset quantity of symbols in the first slot, or there are the preset quantity of GAP symbols in the first slot.

In a possible design, channels on which the first sidelink information and the second sidelink information are located are physical sidelink feedback channels; or channels on which the first sidelink information and the second sidelink information are located are physical sidelink shared channels; or a channel on which the first sidelink information is located is a physical sidelink feedback channel, and a channel on which the second sidelink information is located is a physical sidelink shared channel; or a channel on which the first sidelink information is located is a physical sidelink shared channel, and a channel on which the second sidelink information is located is a physical sidelink feedback channel.

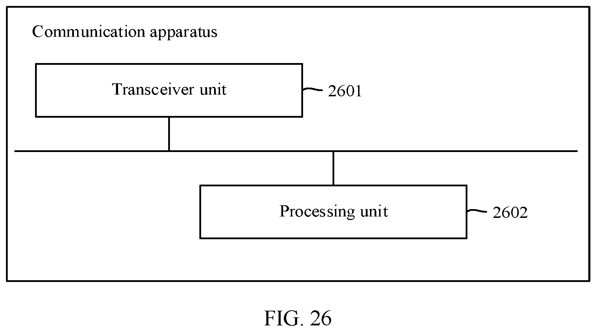

An embodiment of this application may further provide a communication apparatus that may be used for any terminal device. FIG. 26 is still another diagram of a structure of a communication apparatus according to an embodiment of this application.

As shown in FIG. 26, the communication apparatus may include a transceiver unit 2601 and a processing unit 2602.

The transceiver unit 2601 is configured to send sidelink information to a second terminal device in a first slot, or receive sidelink information from a second terminal device in a first slot, where the first slot includes at least two consecutive GAP symbols.

Optionally, the processing unit 2602 is configured to select a time-frequency resource for sidelink information.

It should be understood that division into units of the apparatus is merely logical function division. In an actual implementation, all or some units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit with a signal processing capability. In an implementation process, steps in the foregoing methods or the foregoing units may be implemented by using a hardware integrated logic circuit in a processor element, or may be implemented in the form of software invoked by the processing element.

In an example, any one of the foregoing units in the apparatus may be one or more integrated circuits configured to implement the foregoing methods, for example, one or more ASICs, one or more DSPs, one or more FPGAs, or a combination of at least two of the integrated circuit forms.

For another example, when a unit in the apparatus may be implemented in a manner in which a processing element schedules a program, the processing element may be a general-purpose processor, such as a CPU or another processor that can invoke a program. For still another example, the units may be integrated and implemented in a form of a system-on-a-chip (system-on-a-chip, SoC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus, which may be used for the first terminal device or the second terminal device. The communication apparatus may include a processor and an interface circuit. There may be one or more processors.

When the communication apparatus is used for the first terminal device, the processor is configured to communicate with another apparatus through the interface circuit, and perform the steps performed by the first terminal device in the foregoing methods.

When the communication apparatus is used for the second terminal device, the processor is configured to communicate with another apparatus through the interface circuit, and perform the steps performed by the second terminal device in the foregoing methods.

In an implementation, the units of the first terminal device or the second terminal device that respectively implement the corresponding steps in the foregoing methods may be implemented by a processing element by scheduling a program. For example, the apparatus used for the first terminal device or the second terminal device may include a processing element and a storage element. The processing element invokes a program stored in the storage element, to perform the method correspondingly performed by the first terminal device or the second terminal device in the foregoing method embodiments. The storage element may be a storage element located on a same chip as the processing element, that is, an on-chip storage element.

In another implementation, the program used to perform the method performed by the first terminal device or the second terminal device in the foregoing methods may be in a storage element located on a different chip from the processing element, that is, an off-chip storage element. In this case, the processing element invokes or loads the program from the off-chip storage element to the on-chip storage element, to invoke and perform the method correspondingly performed by the first terminal device or the second terminal device in the foregoing method embodiments.

For example, an embodiment of this application may further provide a communication apparatus. The communication apparatus may include a processor, configured to execute computer instructions stored in a memory. When the computer instructions are executed, the apparatus is enabled to perform the method performed by the first terminal device or the second terminal device. The memory may be located inside or outside the communication apparatus. In addition, there are one or more processors.

In still another implementation, the units of the first terminal device or the second terminal device that implement the steps in the foregoing methods may be configured as one or more processing elements. These processing elements may be correspondingly disposed on the first terminal device or the second terminal device. The processing element herein may be an integrated circuit, for example, one or more ASICs, one or more DSPs, one or more FPGAs, or a combination of these integrated circuits. These integrated circuits may be integrated together to form a chip.

The units of the first terminal device or the second terminal device that implement the steps in the foregoing methods may be integrated together, and implemented in a form of a SoC. The SoC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of these integrated circuits.

The storage element may be one memory, or may be a general term of a plurality of storage elements.

For example, an embodiment of this application further provides a chip system. The chip system may be used for the first terminal device or the second terminal device. The chip system includes one or more interface circuits and one or more processors. The interface circuit and the processor are interconnected through a line. The processor receives and executes computer instructions from a memory of an electronic device through the interface circuit, to implement the method correspondingly performed by the first terminal device or the second terminal device in the foregoing method embodiments. For the first terminal device or the second terminal device, the electronic device may be the terminal device or a device in the terminal device, or may be another device communicating with the terminal device.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the methods in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are run in a first terminal device or a chip built in the first terminal device, the first terminal device is enabled to perform the method performed by the first terminal device in the foregoing embodiments.

Alternatively, when the computer software instructions are run in a second terminal device or a chip built in the second terminal device, the second terminal device is enabled to perform the method performed by the second terminal device in the foregoing embodiments.

Optionally, an embodiment of this application further provides a communication apparatus. The communication apparatus may include a transceiver unit and a processing unit. The transceiver unit may be configured to send and receive information, or configured to communicate with another network element. The processing unit may be configured to process data. For example, the apparatus may implement, through the transceiver unit and the processing unit, the method performed by the first terminal device or the second terminal device.

Optionally, an embodiment of this application further provides a computer program product. When the computer program product is executed, the method performed by the first terminal device or the second terminal device may be implemented.

Based on the foregoing embodiments, an embodiment of this application further provides a communication system, including a first terminal device and a second terminal device. The first terminal device performs the method performed by the first terminal device in the foregoing embodiments, and the second terminal device performs the method performed by the second network device in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
excluding, from a first candidate resource set, N time units adjacent to a first time-frequency resource in the time domain, to obtain a second candidate resource set, wherein N is a positive integer greater than 0, and the first time-frequency resource is used to receive or send first sidelink information;
determining a second time-frequency resource based on the second candidate resource set; and
sending second sidelink information to a second terminal device on the second time-frequency resource.

2. The method according to claim 1, wherein the method further comprises:
excluding the first time-frequency resource from the first candidate resource set.

3. The method according to claim 1 or 2, wherein N is preconfigured, configured, or predefined.

4. The method according to any one of claims 1 to 3, wherein a value of N is related to a beam switching capability of a first terminal device, and the beam switching capability of the first terminal device indicates a quantity of times that the first terminal device is capable of performing beam switching in one slot.

5. The method according to any one of claims 1 to 4, wherein the N time units are used to perform beam switching before or after the first sidelink information is sent or received.

6. The method according to any one of claims 1 to 5, wherein the second candidate resource set is determined by a physical layer or a medium access control layer.

7. The method according to any one of claims 1 to 6, wherein the first time-frequency resource and the second time-frequency resource are separated by at least the N time units in the time domain, or when beams corresponding to the first sidelink information and the second sidelink information are different, the first time-frequency resource and the second time-frequency resource are separated by at least the N time units in the time domain.

8. The method according to any one of claims 1 to 7, wherein the method further comprises:
excluding a non-preferred time-frequency resource of the second terminal device from the first candidate resource set, wherein the non-preferred time-frequency resource of the second terminal device comprises M time units adjacent to a third time-frequency resource in the time domain, M is a positive integer greater than 0, and the third time-frequency resource is used by the second terminal device to receive or send third sidelink information.

9. The method according to claim 8, wherein the non-preferred time-frequency resource of the second terminal device further comprises the third time-frequency resource.

10. The method according to claim 8 or 9, wherein the method further comprises:
receiving first indication information from the second terminal device, wherein the first indication information indicates the non-preferred time-frequency resource of the second terminal device.

11. The method according to any one of claims 1 to 7, wherein the determining the second time-frequency resource based on the second candidate resource set comprises:
determining the second time-frequency resource based on the second candidate resource set and a preferred time-frequency resource of the second terminal device, or based on a preferred time-frequency resource of the second terminal device, wherein
the preferred time-frequency resource of the second terminal device does not comprise M time units adjacent to a third time-frequency resource in the time domain, M is a positive integer greater than 0, and the third time-frequency resource is used by the second terminal device to receive or send third sidelink information.

12. The method according to claim 11, wherein the preferred time-frequency resource of the second terminal device does not comprise the third time-frequency resource.

13. The method according to claim 11 or 12, wherein the method further comprises:
receiving second indication information from the second terminal device, wherein the second indication information indicates the preferred time-frequency resource of the second terminal device.

14. The method according to any one of claims 8 to 13, wherein M is preconfigured, configured, or predefined.

15. The method according to any one of claims 8 to 14, wherein a value of M is related to a beam switching capability of the second terminal device, and the beam switching capability of the second terminal device indicates a quantity of times that the second terminal device is capable of performing beam switching in one slot.

16. The method according to any one of claims 8 to 15, wherein the M time units are used to perform beam switching before or after the third sidelink information is sent or received.

17. The method according to any one of claims 1 to 16, wherein the method further comprises:
receiving third indication information from the second terminal device, wherein the third indication information indicates whether a beam switching conflict exists between the second time-frequency resource and the third time-frequency resource, and the third time-frequency resource is used by the second terminal device to receive or send the third sidelink information; and
reselecting the second time-frequency resource when the third indication information indicates that a beam switching conflict exists between the second time-frequency resource and the third time-frequency resource.

18. The method according to any one of claims 1 to 17, wherein the time unit comprises a slot, a symbol, or a subframe.

19. A communication apparatus, wherein the apparatus comprises:
a processing unit, configured to exclude, from a first candidate resource set, N time units adjacent to a first time-frequency resource in the time domain, to obtain a second candidate resource set, wherein N is a positive integer greater than 0, and the first time-frequency resource is used to receive or send first sidelink information, wherein
the processing unit is further configured to determine a second time-frequency resource based on the second candidate resource set; and
a sending unit, configured to send second sidelink information to a second terminal device on the second time-frequency resource.

20. The apparatus according to claim 19, wherein the processing unit is further configured to exclude the first time-frequency resource from the first candidate resource set.

21. The apparatus according to claim 19 or 20, wherein N is preconfigured, configured, or predefined.

22. The apparatus according to any one of claims 19 to 21, wherein a value of N is related to a beam switching capability of a first terminal device, and the beam switching capability of the first terminal device indicates a quantity of times that the first terminal device is capable of performing beam switching in one slot.

23. The apparatus according to any one of claims 19 to 22, wherein the N time units are used to perform beam switching before or after the first sidelink information is sent or received.

24. The apparatus according to any one of claims 19 to 23, wherein the second candidate resource set is determined by a physical layer or a medium access control layer.

25. The apparatus according to any one of claims 19 to 24, wherein the first time-frequency resource and the second time-frequency resource are separated by at least the N time units in the time domain, or when beams corresponding to the first sidelink information and the second sidelink information are different, the first time-frequency resource and the second time-frequency resource are separated by at least the N time units in the time domain.

26. The apparatus according to any one of claims 19 to 25, wherein the processing unit is further configured to exclude a non-preferred time-frequency resource of the second terminal device from the first candidate resource set, wherein the non-preferred time-frequency resource of the second terminal device comprises M time units adjacent to a third time-frequency resource in the time domain, M is a positive integer greater than 0, and the third time-frequency resource is used by the second terminal device to receive or send third sidelink information.

27. The apparatus according to claim 26, wherein the non-preferred time-frequency resource of the second terminal device further comprises the third time-frequency resource.

28. The apparatus according to claim 26 or 27, wherein the apparatus further comprises:
a receiving unit, configured to receive first indication information from the second terminal device, wherein the first indication information indicates the non-preferred time-frequency resource of the second terminal device.

29. The apparatus according to any one of claims 19 to 25, wherein the processing unit is specifically configured to determine the second time-frequency resource based on the second candidate resource set and a preferred time-frequency resource of the second terminal device, or based on a preferred time-frequency resource of the second terminal device, wherein
the preferred time-frequency resource of the second terminal device does not comprise M time units adjacent to a third time-frequency resource in the time domain, M is a positive integer greater than 0, and the third time-frequency resource is used by the second terminal device to receive or send third sidelink information.

30. The apparatus according to claim 29, wherein the preferred time-frequency resource of the second terminal device does not comprise the third time-frequency resource.

31. The apparatus according to claim 29 or 30, wherein the apparatus further comprises:
a receiving unit, configured to receive second indication information from the second terminal device, wherein the second indication information indicates the preferred time-frequency resource of the second terminal device.

32. The apparatus according to any one of claims 26 to 31, wherein M is preconfigured, configured, or predefined.

33. The apparatus according to any one of claims 26 to 32, wherein a value of M is related to a beam switching capability of the second terminal device, and the beam switching capability of the second terminal device indicates a quantity of times that the second terminal device is capable of performing beam switching in one slot.

34. The apparatus according to any one of claims 26 to 33, wherein the M time units are used to perform beam switching before or after the third sidelink information is sent or received.

35. The apparatus according to any one of claims 19 to 34, wherein the apparatus further comprises:
the receiving unit, configured to receive third indication information from the second terminal device, wherein the third indication information indicates whether a beam switching conflict exists between the second time-frequency resource and the third time-frequency resource, and the third time-frequency resource is used by the second terminal device to receive or send the third sidelink information; and
the processing unit is further configured to reselect the second time-frequency resource when the third indication information indicates that a beam switching conflict exists between the second time-frequency resource and the third time-frequency resource.

36. The apparatus according to any one of claims 19 to 35, wherein the time unit comprises a slot, a symbol, or a subframe.

37. A communication apparatus, wherein the apparatus comprises: a processor, configured to execute computer instructions stored in a memory, and when the computer instructions are executed, the apparatus is enabled to perform the method according to any one of claims 1 to 18.

38. A communication apparatus, wherein the apparatus comprises a processor and an interface circuit, and the processor is configured to communicate with another apparatus through the interface circuit, and perform the method according to any one of claims 1 to 18.

39. A computer-readable storage medium, comprising computer software instructions, wherein
when the computer software instructions are run in a terminal device or a chip built in the terminal device, the terminal device is enabled to perform the method according to any one of claims 1 to 18.

40. A computer program product, wherein when the computer program product is executed, the method according to any one of claims 1 to 18 is implemented.

41. A chip system, wherein the chip system is used for a terminal device, and the chip system comprises one or more interface circuits and one or more processors;
the interface circuit and the processor are interconnected through a line; and
the processor receives computer instructions from a memory of an electronic device through the interface circuit, and executes the computer instructions, to implement the method according to any one of claims 1 to 18.

42. A communication system, comprising a first terminal device and a second terminal device, wherein
the first terminal device receives or sends first sidelink information on a first time-frequency resource; and
the first terminal device performs the method according to any one of claims 1 to 18, and sends second sidelink information to the second terminal device.
